# EUROPÄISCHE PATENTSCHRIFT

(11) **EP 2 630 056 B1**
(45) Veröffentlichungstag und Bekanntmachung des Hinweises auf die Patenterteilung: **10.09.2014**
(21) Anmeldenummer: 11771093.9
(22) Anmeldetag: 13.10.2011
(51) Int. Cl.: B65D 71/00, B65D 77/00

(54) **UMVERPACKUNG ZUR TRANSPORTSICHERUNG MINDESTENS EINES PACKSTÜCKS**
EXTERIOR PACKAGING FOR SECURING AT LEAST ONE PACKED ITEM FOR TRANSPORT
DOUBLE EMBALLAGE POUR LA SÉCURISATION DU TRANSPORT D'AU MOINS UN ÉLÉMENT D'EMBALLAGE

(30) Priorität: 19.10.2010 EP 10187996
(43) Veröffentlichungstag der Anmeldung: 28.08.2013
(73) Patentinhaber: Roche Diagnostics GmbH, 68305 Mannheim (DE); F.Hoffmann-La Roche AG, 4070 Basel (CH)
(72) Erfinder: BURKARDT, Holger, 67165 Waldsee (DE); FRISCH, Norbert, 68259 Mannheim (DE)
(74) Vertreter: Stößel, Matthias
(86) Internationale Anmeldenummer: PCT/EP2011/067853
(87) Internationale Veröffentlichungsnummer: WO 2012/052340

(56) Entgegenhaltungen:
- WO-A1-01/25101
- WO-A2-2009/039544
- DE-A1- 2 635 107
- DE-B- 1 151 215
- DE-U1- 7 602 244
- DE-U1- 9 114 031
- GB-A- 2 340 108

## Beschreibung

### Gebiet der Erfindung

Die Erfindung betrifft eine Umverpackung zur Transportsicherung mindestens eines Packstücks. Weiterhin betrifft die Erfindung ein Verfahren zur Transportsicherung einer Ware. Derartige Umverpackungen und Verfahren zur Transportsicherung werden insbesondere im Bereich des Versands von Gefahrgütern eingesetzt, beispielsweise Gefahrgütern der chemischen Industrie, der pharmazeutischen oder diagnostischen Industrie, der Medizintechnik oder anderer Industriezweige. Auch andere Einsatzgebiete sind jedoch möglich.

### Stand der Technik

In der täglichen Routine des Warenversands müssen üblicherweise eine Vielzahl von Waren gleicher Art oder unterschiedlicher Art zusammengefasst werden, um diese auf der Schiene, der Straße, dem Seeweg oder per Luftfracht zu versenden. Dies erfolgt typischerweise unter Verwendung von Transportpaletten, also flachen Konstruktionen, auf welche die Waren gestapelt werden. Transportpaletten können üblicherweise mit einem Hubwagen oder Gabelstapler verladen werden. Wichtig bei derartigen Frachtstücken ist allgemein, dass beim Beladen der Transportpaletten eine ausreichende Absicherung des Transportguts gegen ein Herabfallen, gegen Schädigungen oder gegen ein Austreten der Ware gewährleistet ist. Bei gefährlichen Waren, insbesondere so genannten Gefahrgütern, sind hierbei besonders hohe Anforderungen an diese Transportsicherung zu stellen.

Bei bisherigen Techniken der Transportsicherung wird daher die Ware zunächst von einem oder mehreren Packmitteln umschlossen, beispielsweise einem Karton, so dass ein so genanntes Packstück entsteht. Diese Packstücke werden in der Regel gemäß einem vorgegebenen Stapelplan auf eine Palette als Träger aufgesetzt, beispielsweise eine so genannte Euro-Palette oder eine World-Palette aus Holz oder Kunststoff. Nicht volle Lagen der Packstücke werden mit leeren Packmitteln als Ladehilfsmittel ausgefüllt. Anschließend wird dieser Stapel mit einer Folie umwickelt, um einen so genannten Overpack zu bilden. Zusätzlich muss in der Regel eine Transportsicherung, insbesondere gegen ein Herabfallen der Packstücke, durch eine Umreifung und/oder Bänder hergestellt werden. Weiterhin können ein oder mehrere Kantenschutze aufgebracht werden.

Für Umverpackungen, welche selbst ein oder mehrere Packstücke mit Gefahrgütern umfassen, gelten insbesondere im Bereich der Luftfracht besondere Anforderungen. So sind für Overpacks, in denen ein oder mehrere Packstücke mit Gefahrgut zu einer Versandeinheit mit einer entsprechenden Kennzeichnung zusammengefasst sind, insbesondere die Vorgaben der IATA (International Air Transport Association), Abschnitt 5 - " Verpacken" , 5.0.1.5 von Relevanz. Hiernach muss der Versender bei Verwendung einer Umverpackung zur Umschließung von mehreren Gefahrgut-Packstücken dafür sorgen, dass verschiedene Forderungen eingehalten werden. So dürfen in einer Umverpackung weder Packstücke sein, welche verschiedene Stoffe enthalten, die gefährlich miteinander reagieren können, noch Packstücke mit gefährlichen Gütern, welche eine Trennung erfordern. Weiterhin muss jedes Packstück innerhalb einer Umverpackung korrekt gepackt, markiert, gekennzeichnet und ohne Anzeichen von Beschädigung oder Leckage sein. Weiterhin sind bestimmte Anforderungen an die Kennzeichnung der Packstücke zu erfüllen, und die vorgesehene Funktion jedes Packstücks darf nicht durch die Umverpackung beeinträchtigt werden.

Derzeitige Overpacks, in denen ein oder mehrere Packstücke als Transporteinheit zusammengefasst und zum Transport gesichert sind, weisen mehrere Nachteile auf. So erfordern derzeitige Overpacks zur Transportsicherung in der Regel eine feste Verbindung der Packstücke mit einer Palette als Ladungsträger, beispielsweise in Form einer Umreifung. Weiterhin ist das manuelle Erstellen von Overpacks arbeitsintensiv und bezüglich der Transportkosten, insbesondere in der Luftfracht, äußerst kostenintensiv. Unabhängig vom Gewicht der Packstücke müssen im gängigen Overpack in der Regel stets 25 kg, resultierend aus der Transportpalette als Träger, bei den Kosten mitberücksichtigt werden, was pro Overpack-Einheit typischerweise Kosten von derzeit typischerweise knapp 70 EUR pro Versandeinheit verursacht. Weiterhin sind gängige Transportpaletten nicht nur mit einem erheblichen Gewicht verbunden, sondern auch mit erheblichen Kosten, da typischerweise Transportkreisläufe nicht geschlossen sind und ein Rücktransport der Transportpaletten zum Ausgangspunkt der Fracht in der Regel nicht erfolgt. Ein weiterer Nachteil besteht darin, dass in der Regel erst ab einer gewissen Anzahl von Versandstücken Overpacks gebildet werden können.

Aus dem Stand der Technik ist neben den beschriebenen Overpacks und neben den genannten Packmitteln grundsätzlich eine Vielzahl von Verpackungen bekannt, die grundsätzlich alternativ eingesetzt werden könnten, sofern diese den vorgegebenen Richtlinien und Vorschriften entsprechen. Lediglich als Beispiel eines möglichen Packmittels wird diesbezüglich auf WO 01/25101 A1 verwiesen, welche einen flexiblen Zwischencontainer für den Transport und die Speicherung von festem Material offenbart. Der Container weist eine würfelförmige Gestalt auf, mit einem äußeren Gehäuse und einem in dieses eingebrachten inneren Beutel. Das äußere Gehäuse weist zum Beladen ein aufklappbares Deckelteil auf.

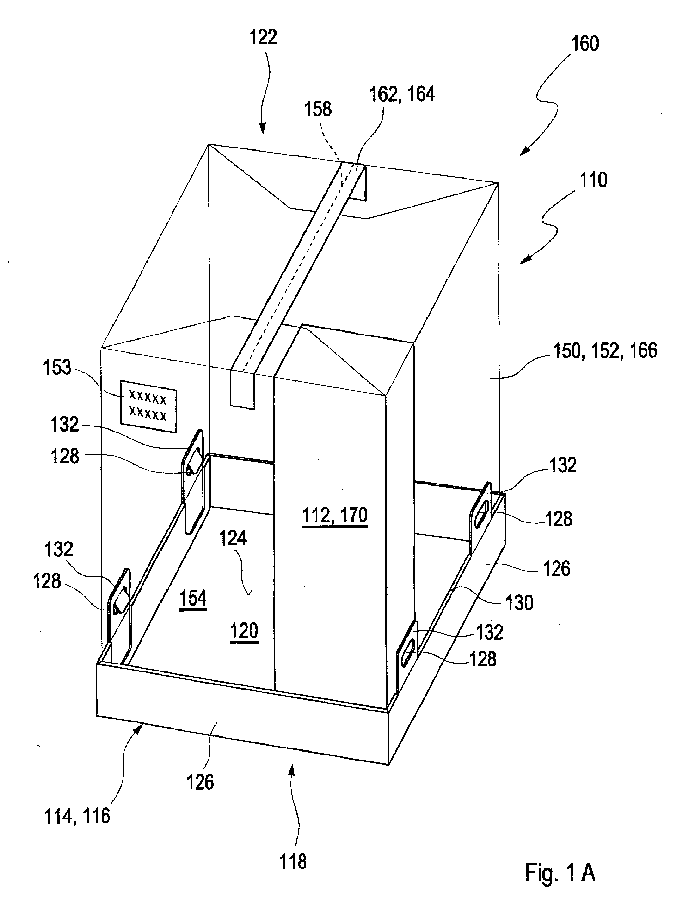

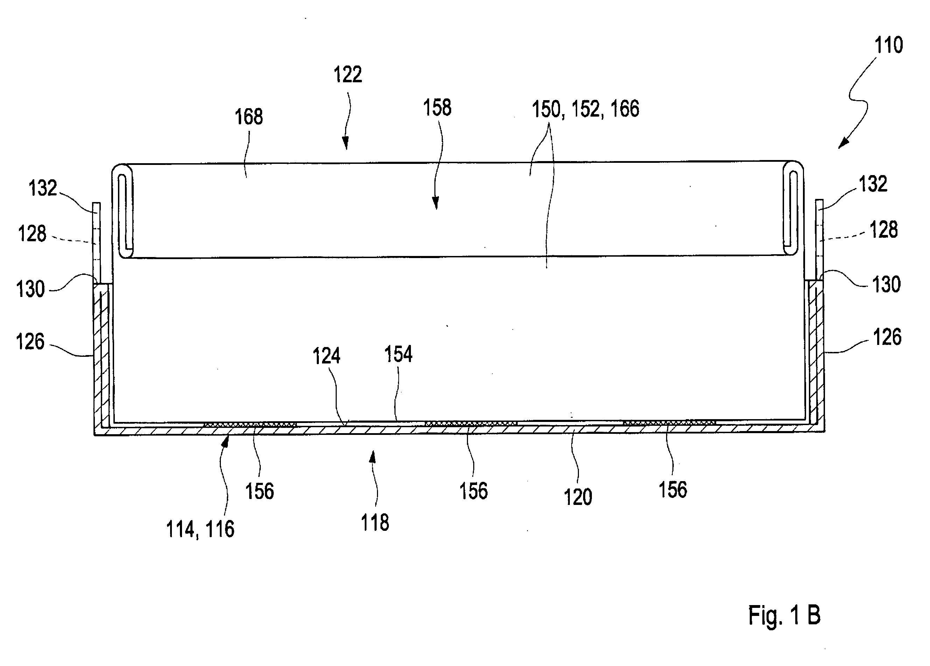

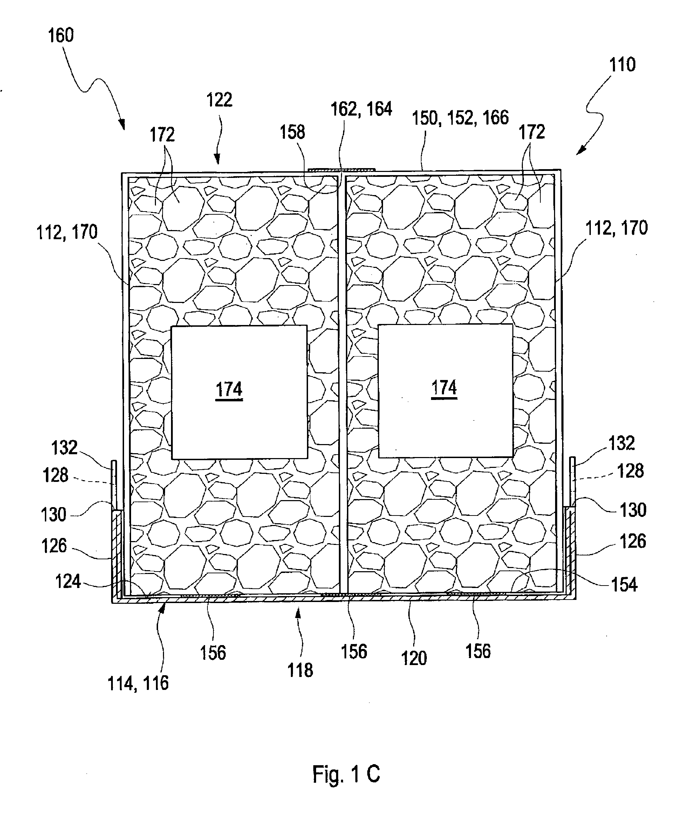

In DE 26 35 107 A1 wird ein Behälter für Schüttgut beschrieben. Der Behälter weist einen starren Kasten auf, welcher beispielsweise zusammenklappbar ausgestaltet ist. Am unteren Teil einer Seitenwand dieses Kastens ist eine Luke vorgesehen. In dem Kasten ist ein Schlauch aus einem elastischen Stoff, beispielsweise einem Kunststoff, aufgenommen. Dieser Schlauch besteht aus einem Behälterteil und einem Schüttteil, wobei das obere Ende des Schlauchs in den Figuren 1 und 5 um den oberen Rand des Kastens zur Befestigung des oberen Endes am Kasten gebogen ist. Der Schüttteil wird in einem Lagerzustand in dem starren Kasten gefaltet.

In DE 91 14 031 U1 wird ein Transportbehälter beschrieben, der aus einem formsteifen Außenkasten mit Boden- und Seitenwandung und einem aus diesem herausnehmbaren Einsatz besteht. Der Einsatz ist als blockförmiger Beutel aus Naturfaserstoffen ausgestaltet, der über die Seitenwandung des Außenkastens mit einem Höhenabschnitt nach oben vorsteht, welcher durch Falteinschlag etwa auf der Höhe des oberen Randes der Seitenwandung des Außenkastens einen Verschluss bildet.

In WO 2009/039544 A2 wird eine Tragetasche für Gegenstände offenbart. Dabei wird eine Palette mit Dosenbier beschrieben, welche ein Papptablett mit Dosen aufweist. Das Papptablett mit den Dosen wird mit einer Folie fest umwickelt.

In DE 76 02 244 U1 wird ein Plastikbeutel zur Hochwassersicherung von palettierten Gütern offenbart. Wie beispielsweise in der einzigen Figur dargestellt ist, wird dabei ein Plastikbeutel verwendet, der eine Palette mit Ware umschließt. Der Plastikbeutel weist eine aufschwimmende Oberkante auf.

In GB 2 340 108 A wird eine mehrlagige Warenverpackung beschrieben. Diese umfasst eine im Wesentlichen planare Basis, welche beispielsweise aus Wellpappe hergestellt sein kann.

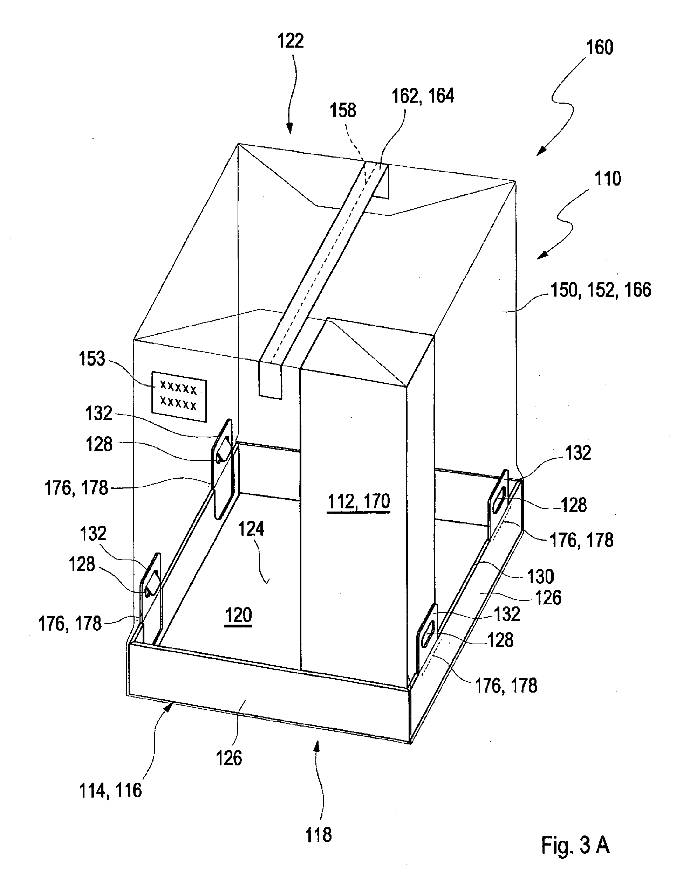

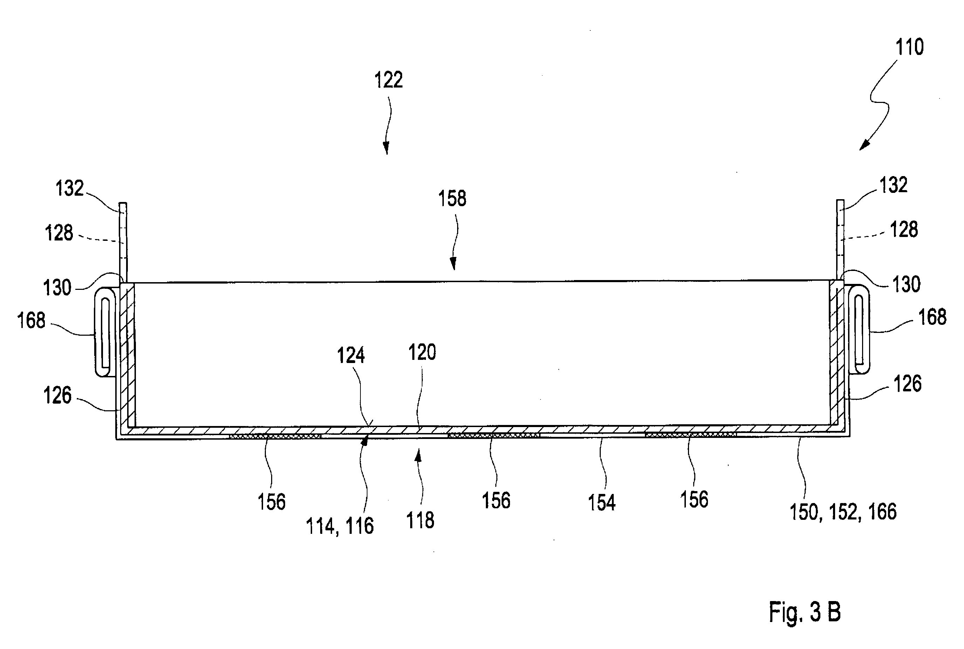

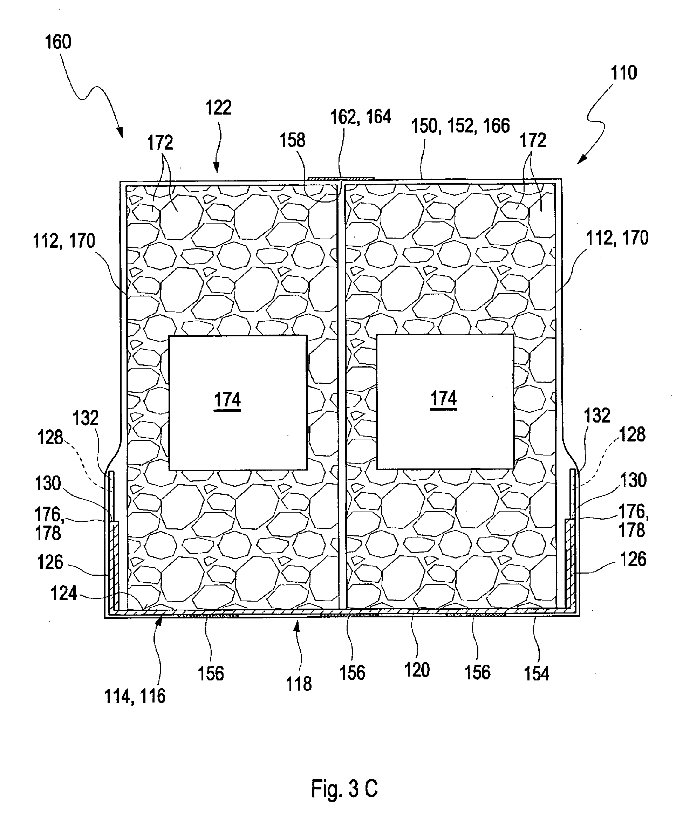

In DE 1 151 215 B wird ein Transportbehälter aus Pappe oder Wellpappe offenbart, der beispielsweise als Tragekorb für Obst dienen kann. In den Figuren 1 und 3 ist dargestellt, dass dieser beispielsweise aus einem entsprechenden Zuschnitt hergestellt werden kann und dass dieser Laschen mit Ausschnitten als Tragegriffe umfassen kann.

Nach wie vor besteht jedoch die technische Herausforderung, dass derartige bekannte Packmittel nach einem Beladen zur Transportsicherung zu einer Transporteinheit zusammengefasst werden müssen, beispielsweise wiederum in Form bekannter Overpacks, mit den oben beschriebenen Herausforderungen und Nachteilen.

### Aufgabe der Erfindung

Es ist daher eine Aufgabe der vorliegenden Erfindung, eine Umverpackung zur Transportsicherung mindestens eines Packstücks sowie ein Verfahren zur Transportsicherung mindestens einer Ware bereitzustellen, welche die Nachteile bekannter Umverpackungen und Verfahren zur Transportsicherung zumindest weitgehend vermeiden. Insbesondere soll eine kostengünstige Transportsicherung bereitgestellt werden, welche deutlich verringerte Verpackungskosten und einen deutlich verringerten Arbeitsaufwand zur Erstellung von Transporteinheiten beinhaltet. Weiterhin sollen Gewicht und Volumen der Umverpackung gegenüber bekannten Overpacks deutlich reduziert werden.

### Offenbarung der Erfindung

Diese Aufgabe wird durch die Erfindung mit den Merkmalen der unabhängigen Patentansprüche gelöst. Vorteilhafte Weiterbildungen der Erfindung, welche einzeln oder in beliebiger Kombination realisierbar sind, sind in den abhängigen Ansprüchen dargestellt.

In einem ersten Aspekt der vorliegenden Erfindung wird eine Umverpackung zur Transportsicherung mindestens eines Packstücks, vorzugsweise mindestens zweier Packstücke, vorgeschlagen. Unter einem Packstück ist dabei eine Einheit aus mindestens einem Packmittel und mindestens einer vollständig oder teilweise in dem Packmittel aufgenommenen Ware zu verstehen. Insbesondere kann es sich bei der Ware um ein Gefahrgut handeln. Bei dem Packmittel kann es sich insbesondere um einen Karton oder auch um eine andere Art von Packmittel handeln. Auch Kombinationen verschiedener Packmittel in dem Packstück sind möglich.

Unter einer Transportsicherung, insbesondere dem Vorgang einer Transportsicherung, ist allgemein eine Vorbereitung des mindestens einen Packstücks, vorzugsweise der mindestens zwei Packstücke, zu verstehen, aufgrund derer das mindestens eine Packstück auf dem Landweg, dem Seeweg, im Luftverkehr oder unter Kombination der genannten Transportwege transportiert werden kann. Insbesondere soll die Transportsicherung derart ausgestaltet sein, dass diese den gängigen Transportvorschriften genügt, beispielsweise für Gefahrgüter den oben genannten Vorschriften der IATA für den Luftverkehr.

Unter einer Transporteinheit wird im Folgenden die Einheit verstanden, welche das mindestens eine Packstück, vorzugsweise die mindestens zwei oder mehr Packstücke, und die Umverpackung umfasst. Die Transporteinheit kann insbesondere letztendlich einstückig ausgestaltet sein und als quasi einzelnes Teil behandelt werden, beispielsweise bei einem Beladen oder Entladen eines Frachtraums oder bei einer Lagerung. Insbesondere kann die Transportsicherung derart erfolgen, dass mehrere Packstücke durch die Umverpackung zu der Transporteinheit zusammengefasst werden.

Unter einer Umverpackung ist im Rahmen der vorliegenden Erfindung eine Verpackung zu verstehen, welche das mindestens eine Packstück, vorzugsweise die mindestens zwei oder mehr Packstücke, in der Transporteinheit zumindest teilweise, vorzugsweise vollständig, umschließt. Insbesondere kann durch die Umverpackung eine Sicherung der Packstücke gegenüber einem Herabfallen und/oder einem Verrutschen innerhalb der Transporteinheit gewährleistet sein. Weiterhin kann die Umverpackung einen Schutz des mindestens einen Packstücks gegenüber äußeren Einflüssen gewährleisten, beispielsweise einen Schutz gegenüber Staub, Verschmutzungen, Feuchtigkeit, mechanischen Einflüssen oder anderen Arten von Einflüssen, welche das mindestens eine Packstück und/oder die Ware beeinträchtigen könnten.

Die Umverpackung weist mindestens ein Trägerelement auf, vorzugsweise genau ein Trägerelement, mit einer Oberseite und einer Unterseite. Unter einem Trägerelement ist dabei ein Element zu verstehen, welches eingerichtet ist, um das mindestens eine Packstück aufzunehmen, beispielsweise indem dieses direkt oder indirekt auf die mindestens eine Oberseite aufgestellt wird. Das Trägerelement soll insbesondere eine mechanische Stabilität aufweisen, dergestalt, dass dieses zumindest bis zu einer gewissen maximalen Belastbarkeit ein Anheben von Packstücken, welche auf dem Trägerelement aufgenommen sind, ermöglicht, ohne dass das Trägerelement selbst beschädigt wird, beispielsweise reißt oder bricht. Das Trägerelement kann insbesondere im Wesentlichen formstabil ausgestaltet sein, das heißt derart ausgestaltet sein, dass dieses bis zu einer vorgegebenen maximalen Belastbarkeit, beispielsweise bis maximal 75 kg oder bis maximal 50 kg, nicht derart verformt wird, dass ein Brechen oder Reißen des Trägerelements aufgrund einer übermäßigen Verformung auftritt.

Das mindestens eine Trägerelement weist mindestens ein der Unterseite zuweisendes Bodenteil und mindestens einen der Oberseite zuweisenden Rand auf. Das Bodenteil ist beispielsweise derart ausgestaltet, dass dieses direkt oder indirekt mit dem mindestens einen Packstück, vorzugsweise den mehreren Packstücken, beladen werden kann. Beispielsweise kann dieses Bodenteil als ebenes Teil ausgestaltet sein, beispielsweise mit einer rechteckigen Grundfläche. Insbesondere kann das Bodenteil als plattenförmiges Teil ausgestaltet sein, mit einer Dicke, welche dessen laterale Ausdehnung um mindestens einen Faktor 10 unterschreitet, vorzugsweise um mindestens einen Faktor 100. Insbesondere kann das Bodenteil als rechteckförmiges, plattenförmiges Teil ausgestaltet sein, beispielsweise mit einer Dicke von maximal 50 mm, vorzugsweise maximal 30 mm, insbesondere maximal 20 mm und besonders bevorzugt maximal 10 mm.

Weiterhin weist das Trägerelement den mindestens einen der Oberseite zuweisenden Rand auf. Dieser Rand, welcher vorzugsweise zumindest teilweise um das Bodenteil umläuft, ist derart ausgestaltet, dass das Trägerelement zu der Oberseite hin zumindest teilweise geöffnet ist und eingerichtet ist, um das Packstück direkt oder indirekt zu tragen. Dementsprechend kann das Trägerelement insbesondere als so genannter Tray ausgestaltet sein, also als offenes Verpackungsmittel, welches vorzugsweise eine Tabletform aufweist, mit einem nach oben, zur Oberseite hin ragenden, vorzugsweise, jedoch nicht notwendigerweise, vollständig umlaufenden Rand und einem Bodenteil, welches vorzugsweise von dem Rand umschlossen wird. Der Rand kann beispielsweise eine Höhe senkrecht zur Flächenausdehnung des Bodenteils aufweisen, welche maximal 300 mm beträgt, vorzugsweise maximal 200 mm, insbesondere maximal 150 mm. Insbesondere kann der Rand eine Höhe von 50 mm bis 200 mm aufweisen, insbesondere eine Höhe von 100 mm bis 150 mm und besonders bevorzugt eine Höhe von 120 mm.

Bei der Transportsicherung kann das Trägerelement insbesondere anstelle einer Transportpalette oder als Transportpalette verwendet werden, ohne dass eine Transportpalette herkömmlicher Art, beispielsweise eine Euro-Palette oder eine World-Palette, zusätzlich erforderlich wäre. Besonders bevorzugt ist also eine Verwendung der Umverpackung ohne eine zusätzliche Transportpalette. Die Umverpackung kann also insbesondere im Rahmen einer Transporteinheit eingesetzt werden, welche zusätzlich zu den Packstücken und der Umverpackung keine weitere Transportpalette aufweist, insbesondere keine Euro-Palette und keine World-Palette. Naturgemäß kann die erfindungsgemäße Umverpackung jedoch auch zusätzlich mit der der Unterseite zuweisenden Seite des Bodenteils auf eine Palette aufgebracht werden.

Zusätzlich zu dem mindestens einen Trägerelement weist die Umverpackung weiterhin mindestens ein Beutelelement auf, vorzugsweise genau ein Beutelelement. Unter einem Beutelelement wird dabei ein verformbares Element mit mindestens einem Innenraum, vorzugsweise genau einem Innenraum, verstanden, welcher von einer Beutelwand des Beutelelements zumindest teilweise umschlossen wird. Die Beutelwand ist dabei vorzugsweise dünnwandig und leicht verformbar ausgestaltet, so dass sich beispielsweise die Form des Innenraums innerhalb gewisser Grenzen an eine Füllung des Innenraums anpassen kann. Beispielsweise kann die Beutelwand eine Wanddicke von weniger als 2 mm, vorzugsweise von weniger als 1 mm und besonders bevorzugt von weniger als 0,5 mm oder sogar weniger als 0,2 mm aufweisen. Beispielsweise kann die Beutelwand eine Wanddicke von 0,1 mm bis 2 mm aufweisen, insbesondere von 0,2 mm bis 1,5 mm und besonders bevorzugt von 0,3 mm bis 1,0 mm. Insbesondere kann die Beutelwand einlagig ausgestaltet sein, wobei jedoch auch mehrlagige Beutelwände einsetzbar sind, beispielsweise Laminate. Insbesondere kann die Beutelwand eine durchgängige Beutelwand sein, welche beispielsweise aus einem durchgängigen Stück gefertigt ist und/oder welche zu einen durchgängigen Stück verbunden wurde, beispielsweise durch Verkleben oder Verschweißen gegenüberliegender Kanten.

Das Beutelelement weist mindestens eine Öffnung auf, vorzugsweise genau eine Öffnung, welche vorzugsweise verschließbar ausgestaltet ist und durch welche das Beutelelement befüllt und/oder entleert werden kann. Beispielsweise kann das Beutelelement schlauchförmig ausgestaltet sein, mit einem runden, ovalen oder polygonalen Schlauchquerschnitt, wobei die Öffnung an einem Ende des Schlauchs angeordnet ist und wobei das gegenüberliegende Ende des Schlauchs verschlossen ausgestaltet ist. Damit unterscheidet sich das Beutelelement beispielsweise von gewickelten Folienverpackungen, welche allgemein nicht vom Begriff des Beutelelements umfasst sein sollen.

Beispielsweise kann das Beutelelement genau einen Innenraum aufweisen, welcher von der Beutelwand umschlossen wird, wobei die Beutelwand vorzugsweise genau eine Öffnung aufweist, beispielsweise eine Öffnung mit rundem, ovalem oder polygonalem Querschnitt, durch welche beispielsweise das mindestens eine Packstück und vorzugsweise auch, wie unten näher ausgeführt wird, das mindestens eine Trägerelement in den Innenraum eingebracht werden können. Die Umverpackung kann dann beispielsweise derart ausgestaltet sein, dass in einem befüllten Zustand, beispielsweise in einem maximal befüllten Zustand, die Öffnung an einem oberen Ende des Beutelelements angeordnet ist, wohingegen das mindestens eine Packstück und optional das mindestens eine Trägerelement direkt oder indirekt auf einem der Öffnung gegenüberliegenden Boden des Beutelelements im Innenraum des Beutelelements aufliegen.

Das Beutelelement ist eingerichtet, um das von dem Trägerelement getragene Packstück zu umschließen. Diese Umschließung kann vorzugsweise vollständig erfolgen, wobei jedoch auch eine teilweise Umschließung grundsätzlich möglich ist. Das Beutelelement ist derart relativ zu dem Trägerelement angeordnet, dass sich zumindest in einem maximalen Befüllzustand des Beutelelements das Beutelelement auf der Oberseite des Trägerelements über den Rand des Trägerelements hinaus erstreckt. Insbesondere kann das Beutelelement in dem maximal befüllten Zustand geschlossen sein, beispielsweise indem die Öffnung des Beutelelements durch eine Verklebung, insbesondere durch einen oder mehrere überstreifen, verschlossen ist. In anderen Worten soll das Beutelelement vorzugsweise zumindest in einem maximal befüllten Zustand der Umverpackung, beispielsweise einem vollständig befüllten Zustand der Umverpackung, über den Rand des Trägerelements nach oben, zur Oberseite hin vorstehen, beispielsweise um mindestens die Höhe des Randes, vorzugsweise um mindestens die doppelte Höhe des Randes und besonders bevorzugt um mindestens die dreifache oder sogar mindestens die vierfache Höhe des Randes. Beispielsweise kann, wie oben ausgeführt, der Rand des Trägerelements eine Höhe aufweisen, welche 200 mm nicht übersteigt, vorzugsweise 150 mm nicht übersteigt oder sogar 120 mm nicht übersteigt.

Unter einem maximalen Befüllungszustand oder maximal befüllten Zustand wird im Rahmen der vorliegenden Erfindung ein Zustand verstanden, bei welchen mindestens ein Packstück in das Beutelelement eingebracht ist, derart, dass eine Gesamthöhe des Inhalts des Beutelelements eine maximale in dem Beutelelement aufnehmbare Höhe erreicht hat, ohne dass eine Dehnbelastung des Beutelelements in einer Richtung senkrecht zur Fläche des Bodenteils auftritt, insbesondere ohne dass ein Reißen des Beutelelements erfolgt. In anderen Worten soll das Beutelelement derart eingerichtet sein, dass dieses eine Aufnahme von einem oder mehreren Packstücken oberhalb des Bodenteils des Trägerelements in dem Beutelelement ermöglicht, derart, dass eine Oberseite dieser Packstücke, welche am weitesten über das Trägerelement hinaus steht und somit vorzugsweise die maximale Höhe der Packstücke in der Transporteinheit bestimmt, oberhalb einer oberen Kante des Randes des Trägerelements angeordnet ist.

Das Beutelelement kann in befülltem Zustand, mit einem oder mehreren darin eingeschlossenen Packstücken, eine Höhe oberhalb des Bodenteils aufweisen, welche mindestens 200 mm betragen kann, beispielsweise mindestens 300 mm, mindestens 500 mm oder sogar mindestens 1000 mm. Insbesondere kann das Beutelelement in dem maximalen Befüllungszustand auf der Oberseite mindestens 20 mm, vorzugsweise mindestens 50 mm, insbesondere um mindestens 100 mm oder sogar mindestens 200 mm, besonders bevorzugt sogar um mindestens 500 mm, über eine obere Kante des Randes des Trägerelements vorstehen. Die tatsächliche Höhe der Umverpackung mit dem darin eingeschlossenen mindestens einen Packstück bestimmt sich jedoch grundsätzlich nach der Art der Packstücke. Durch die nach oben offene Ausgestaltung des Trägerelements, in Kombination mit der flexiblen Natur des Beutelelements, ist nach oben hin grundsätzlich eine Flexibilität der Höhe der Umverpackung gegeben. Die Umverpackung kann also insbesondere derart ausgestaltet sein, dass deren Höhe flexibel an das mindestens eine Packstück und/oder an eine variierende Anzahl an Packstücken angepasst werden kann, zumindest bis hin zu einer vorgegebenen maximalen Höhe und/oder vorgegebenen maximalen Anzahl bestimmter Packstücke, wobei das Beutelelement stets eine Oberseite des obersten Packstücks zumindest teilweise überdecken kann.

Das mindestens eine Trägerelement und das mindestens eine Beutelelement können allgemein auf verschiedene Weisen zueinander angeordnet sein, welche auch kombiniert werden können, beispielsweise indem mehrere Beutelelemente vorgesehen sind.

In einer ersten, nicht mehr beanspruchten Weise kann das Beutelelement beispielsweise in das Trägerelement eingebracht sein, derart, dass ein Boden des Beutelelements auf dem Bodenteil des Trägerelements aufliegt. In anderen Worten kann beispielsweise ein Tray, welches das Trägerelement bildet, als Träger für das Beutelelement dienen. Dieses Aufliegen kann lose erfolgen, wobei das Beutelelement nicht an dem Trägerelement fixiert ist. Alternativ kann, wie unten noch näher ausgeführt wird, auch eine Fixierung des Beutelelements an dem Trägerelement erfolgen, beispielsweise durch eine Verklebung und insbesondere durch mindestens einen doppelseitigen Klebestreifen.

In einer erfindungsgemäßen Weise sind das Beutelelement und das Trägerelement derart zueinander angeordnet, dass das Beutelelement das Trägerelement vollständig oder teilweise umschließt. Dies kann insbesondere derart erfolgen, dass das Bodenteil des Trägerelements auf einem Boden des Beutelelements im Inneren des Beutelelements aufliegt. Dabei kann das Bodenteil des Trägerelements lose auf dem Boden des Beutelelements aufliegen, also ohne Fixierung, wobei jedoch alternativ auch eine Fixierung des Trägerelements an dem Beutelelement möglich ist, beispielsweise indem das Trägerelement und insbesondere das Bodenteil des Trägerelements mit dem Beutelelement verklebt sind, beispielsweise durch einen oder mehrere doppelseitigen Klebestreifen. Bevorzugt ist jedoch ein loses Aufliegen des Trägerelements auf dem Beutelelement, beispielsweise dem Boden des Beutelelements.

Die erfindungsgemäße Ausgestaltung, in welcher das Beutelelement das Trägerelement ganz oder teilweise umschließt, bietet insbesondere den Vorteil, dass das Beutelelement gleichzeitig einen Wasserschutz für das Trägerelement und für das mindestens eine Packstück bereitstellen kann. Auf diese Weise kann, wie unten noch näher ausgeführt wird, das Trägerelement beispielsweise ganz oder teilweise aus mindestens einem Material hergestellt werden, welches grundsätzlich keine hohen Anforderungen hinsichtlich einer Wasserfestigkeit aufweisen muss. Beispielsweise kann das Trägerelement ganz oder teilweise aus einem Kartonmaterial, beispielsweise aus Wellpappe, hergestellt sein. Ein weiterer Vorteil der Umschließung des Trägerelements durch das Beutelelement besteht darin, dass grundsätzlich keine Fixierung des Trägerelements an dem Beutelelement oder umgekehrt erforderlich ist. Da das Beutelelement das Trägerelement ganz oder teilweise umschließt, kann das Trägerelement lose in das Beutelelement eingefügt werden, ohne dass das Trägerelement einschließlich des mindestens einen Packstücks in den Innenraum verrutschen kann. Insbesondere im geschlossenen Zustand des Beutelelements, in welchem beispielsweise die Öffnung des Beutelelements durch einen oder mehrere Klebestreifen oder auf andere Weise verschlossen ist, sind das Beutelelement und das Trägerelement sowie gegebenenfalls das mindestens eine Packstück miteinander verbunden.

Das Trägerelement und das Beutelelement können insbesondere eine Einheit bilden. Das Trägerelement und das Beutelelement können, wie oben bereits ausgeführt, lose zueinander angeordnet sein, können jedoch auch miteinander verbunden sein, beispielsweise durch eine stoffschlüssige Verbindung, vorzugsweise eine Verklebung. Beispielsweise kann in der nicht mehr beanspruchten, ersten oben beschriebenen Weise eine Verklebung zwischen dem Bodenteil des Trägerelements und dem Boden des Beutelelements vorgesehen sein, beispielsweise indem auf einer unteren Außenseite des Bodens des Beutelelements eine derartige Verklebung aufgebracht ist. Die Verklebung kann beispielsweise durch einen Klebstoff und/oder einen Klebestreifen gewährleistet sein, beispielsweise ein doppelseitiges Klebeband. Bei der zweiten oben beschriebenen Weise kann beispielsweise im Inneren des Beutelelements mindestens ein Klebemittel eingebracht sein, über welches die dem Innenraum des Beutelelements zuweisende Seite des Bodens des Beutelelements mit einer Unterseite des Trägerelements, beispielsweise einer Unterseite des Bodenteils des Trägerelements, verklebt sein kann. Wiederum kann dieses Klebemittel beispielsweise mindestens einen Klebstoff und/oder mindestens einen Klebestreifen umfassen, beispielsweise mindestens ein doppelseitiges Klebeband. Alternativ zu einer stoffschlüssigen Verbindung zwischen Trägerelement und dem Beutelelement kann jedoch auch ein einfaches Aufliegen des Beutelelements auf dem Trägerelement oder umgekehrt vorgesehen sein, ohne dass eine feste Verbindung zwischen diesen Elementen besteht. Wiederum alternativ können auch andere Arten von Verbindungen vorgesehen sein, beispielsweise kraftschlüssige und/oder formschlüssige Verbindungen, beispielsweise über eine oder mehrere Klemmen. Wie weiter unten ausführlich beschrieben, kann eine formschlüssige Verbindung auch durch optionale Grifflaschen des Trägerelements erfolgen, welche durch hierfür vorgesehene Grifföffnungen des Beutelelement hindurchragen und somit eine formschlüssige Verbindung zwischen Trägerelement und Beutelelement bewirken.

Die Umverpackung kann insbesondere mehrere Zustände aufweisen. Beispielsweise kann das Beutelelement in mindestens einen Aufnahmezustand bringbar sein, wobei in dem Aufnahmezustand eine Öffnung des Beutelelements für eine Befüllung mit dem mindestens einen Packstück freigegeben sein kann. Beispielsweise kann der Aufnahmezustand derart ausgestaltet sein, dass in diesem Aufnahmezustand ein oder mehrere Beutelränder des Beutelelements umgekrempelt ist, um die Öffnung des Beutelelements für eine Befüllung mit dem mindestens einen Packstück freizugeben.

Das Beutelelement kann mindestens einen Versandzustand aufweisen. Insbesondere kann das Beutelelement in mindestens einen Versandzustand bringbar sein, in welchem mindestens ein Packstück in dem Beutelelement aufgenommen ist, wobei das Packstück vorzugsweise vollständig von dem Beutelelement umschlossen ist.

Beispielsweise kann ein Übergang zwischen dem oben beschriebenen Aufnahmezustand mit umgekrempeltem Beutelrand in den Versandzustand dadurch erfolgen, dass der Beutelrand nach Einbringen des mindestens einen Packstücks in den Innenraum des Beutelelements hochgekrempelt wird und über eine Oberseite des mindestens einen Packstücks, vorzugsweise der mehreren Packstücke, geschlagen wird. Anschließend kann die Öffnung des Beutelelements beispielsweise verschlossen werden, beispielsweise durch ein Verkleben und/oder durch Verwenden eines oder mehrerer Verschlusselemente, beispielsweise einem oder mehreren Klebestreifen, Klebstoffen, kraftschlüssigen Verbindungselementen, formschlüssigen Verbindungselementen oder beliebigen Kombinationen dieser Möglichkeiten. Der Aufnahmezustand, in welchem der Beutelrand des Beutelelements umgekrempelt ist, kann beispielsweise auch ein Anlieferzustand der Umverpackung sein, in welcher diese bereitgestellt wird.

Wie oben beschrieben, kann das Packstück insbesondere mindestens ein Packmittel und mindestens eine von dem Packmittel zumindest teilweise, vorzugsweise vollständig, umschlossene Ware umfassen. Das Packmittel kann insbesondere ein Karton sein und/oder ein Kartonmaterial umfassen. Auch andere Arten von Packmitteln sind jedoch grundsätzlich denkbar.

Weitere mögliche Ausgestaltungen betreffen das Trägerelement. Wie oben beschrieben, ist eine Umverpackung bevorzugt, welche derart verwendet wird, dass vorzugsweise keine zusätzliche Transportpalette eingesetzt werden muss. Dementsprechend kann das Trägerelement insbesondere im Wesentlichen formstabil unter üblichen, beim Transport auftretenden Kräften ausgestaltet sein. Das Trägerelement kann vorzugsweise zumindest teilweise aus einem Material hergestellt sein, ausgewählt aus der Gruppe bestehend aus: einem Kartonmaterial; einem Kunststoffmaterial, insbesondere einem geschäumten Kunststoffmaterial; einem Holzmaterial. Dabei können einschichtige oder auch mehrschichtige Materialien eingesetzt werden, beispielsweise Verbundmaterialien oder Laminatmaterialien. Besonders bevorzugt ist die Verwendung eines Kartonmaterials. Das Trägerelement kann insbesondere aus einem Zuschnitt eines Kartonmaterial herstellbar sein, beispielsweise durch ein einfaches Falten und/oder Knicken. Beispielsweise kann der Zuschnitt ein Zuschnitt eines flachen Kartonmaterials sein, welcher mehrere Faltlinien sowie optional eine oder mehrere Perforationen aufweisen kann. Besonders bevorzugt ist es, wenn das Trägerelement aus einem Material hergestellt ist, welches eine Dicke von nicht mehr als 50 mm, besonders bevorzugt von nicht mehr als 30 mm und insbesondere von nicht mehr als 20 mm oder sogar nicht mehr als 10 mm aufweist. Derartige Dicken sind beispielsweise für Kartonmaterialien, beispielsweise Wellpappe und/oder andere Arten von Kartonmaterialien, realisierbar.

Das Trägerelement weist mindestens zwei Griffe auf, vorzugsweise mindestens an zwei aufeinander gegenüberliegenden Seiten angeordnete Griffe. Beispielsweise kann das Trägerelement auf zwei einander gegenüberliegenden Seiten jeweils mindestens zwei Griffe aufweisen, wobei jeweils ein Griff der einen Seite und ein Griff der anderen Seite einander paarweise gegenüberliegen. Dabei können Griffe an zwei Seiten oder auch beispielsweise an mehr Seiten, beispielsweise vier Seiten, des Trägerelements vorgesehen sein.

Die Griffe können insbesondere derart ausgestaltet sein, dass diese eine Anordnung mehrerer Umverpackungen in unmittelbarer Nachbarschaft nicht behindern, so dass mehrere Umverpackungen dichtestmöglich aneinandergestellt werden können. Insbesondere kann das Trägerelement mindestens zwei Grifflaschen aufweisen, wobei die Griffe in den Grifflaschen angeordnet sind. Unter einer Grifflasche ist dabei ein Vorsprung von dem Trägerelement zu verstehen, welcher starr oder auch flexibel zu dem Trägerelement angeordnet sein kann. Beispielsweise können die Grifflaschen aus demselben Material hergestellt sein wie auch das übrige Trägerelement oder auch aus einem unterschiedlichen Material. Insbesondere können die Grifflaschen aus einem Kartonmaterial hergestellt sein. Die Grifflaschen können beispielsweise von dem Rand des Trägerelements ausklappbar und/oder ausziehbar ausgestaltet sein, insbesondere hin zu der Oberseite. Beispielsweise kann der Rand hin zu der Oberseite eine obere Kante aufweisen, wobei von der Kante aus Grifflaschen ausklappbar sind und/oder ausziehbar sind, beispielsweise derart, dass nach dem Ausklappen und/oder Ausziehen die Grifflaschen senkrecht zu dem Bodenteil zur Oberseite hin abstehen. Auf diese Weise können auch bei ausgeklappten und/oder ausgezogenen Grifflaschen mehrere Umverpackungen dichtestmöglich aneinandergestellt werden. Insbesondere können die Grifflaschen derart ausgestaltet sein, dass diese in dem ausgeklappten Zustand seitlich nicht über den Rand vorstehen, so dass sich in einer Ebene parallel zu dem Bodenteil beispielsweise die Abmessungen des Trägerelements durch das Ausklappen und/oder Ausziehen der Grifflaschen nicht vergrößern.

Die Griffe, beispielsweise die Grifflaschen, können grundsätzlich aus demselben Material hergestellt sein wie das übrige Trägerelement, beispielsweise aus einem Kartonmaterial wie beispielsweise Wellpappe. Auch andere Ausgestaltungen sind möglich. Die Griffe, insbesondere die Grifflaschen, können darüber hinaus jeweils eine oder mehrere Griffverstärkungen aufweisen, welche die Stabilität der Griffe erhöht. Beispielsweise können an einem, mehreren oder allen der Griffe jeweils auf das Material des Trägerelements aufgebrachte, beispielsweise aufgeklebte, Griffverstärkungen vorgesehen sein, beispielsweise aus einem Kunststoffmaterial und/oder aus einem Klebeband, wobei die Griffverstärkungen die Öffnungen der Griffe, insbesondere der Grifflaschen, ganz oder teilweise umschließen können.

Wie oben beschrieben, ist die Umverpackung derart ausgestaltet, dass das Beutelelement das Trägerelement zumindest teilweise, vorzugsweise vollständig, umschließt. Das Beutelelement weist mindestens zwei zusätzliche Öffnungen auf, welche - im Gegensatz zu der für die Beladung des Beutelelements einsetzbaren Öffnung des Beutelelements - auch als Grifföffnungen bezeichnet werden können, wobei die Griffe, insbesondere die Grifflaschen, durch diese Grifföffnungen zugänglich sind. Diese Grifföffnungen können beispielsweise als Schlitze, runde oder eckige Öffnungen in dem Beutelelement ausgestaltet sein. Insbesondere können die Schlitze eine Länge aufweisen, welche einer Länge der Griffe, insbesondere der Grifflaschen, entspricht. Ist das Beutelelement schlauchförmig ausgestaltet, mit einem als Bodenteil des Beutelelements dienenden geschlossenen Ende und einer dem Bodenteil gegenüberliegenden Öffnung, so können die Grifföffnungen beispielsweise in einer das Bodenteil und die Öffnung verbindenden Seitenwand des schlauchförmigen Beutelelements angeordnet sein. Die Grifföffnungen sind also vorzugsweise verschieden von der für die Beladung des Beutelelements zuständigen Öffnung. Die Öffnungen oder Grifföffnungen können dabei auch verschiedene Zustände aufweisen und können beispielsweise auch als Perforationen ausgestaltet sein. Beispielsweise können mindestens zwei Perforationen in mindestens einer Beutelwand des Beutelelements vorgesehen sein, vorzugsweise in mindestens zwei einander gegenüberliegenden Beutelwänden. Die mindestens zwei Öffnungen können dabei vorzugsweise mit der Position der Griffe des Trägerelements korrespondieren.

Die Zugänglichkeit der Griffe durch die Grifföffnungen kann auf verschiedene Weise gewährleistet sein. Beispielsweise kann durch die Öffnungen in das Beutelelement eingegriffen werden. Alternativ oder zusätzlich können die Griffe, insbesondere die Grifflaschen, auch durch die Öffnungen aus dem Beutelelement herausragen und auf diese Weise zugänglich sein. Beispielsweise können Schlitze oder Perforationen in langgestreckter Form vorgesehen sein, durch welche Grifflaschen nach außen klappbar und dadurch für einen Benutzer zugänglich sind. Auf diese Weise kann das Beutelelement das Trägerelement und das mindestens eine Packstück, vorzugsweise die mehreren Packstücke, vollständig oder teilweise umschließen, wobei dennoch die Griffe des Trägerelements für einen Transport der Umverpackung bzw. der Transporteinheit zugänglich sind. Insbesondere kann das Beutelelement geschlossen sein, und die Griffe des Trägerelements können in diesem geschlossenen Zustand durch die Grifföffnungen zugänglich sein, beispielsweise indem die Griffe des Trägerelements in diesem geschlossenen Zustand des Beutelelements und/oder der Umverpackung durch die Grifföffnungen aus dem Beutelelement herausragen. Beispielsweise kann die mindestens eine Öffnung, durch welche das Beutelelement mit den Packstücken beladen werden kann, verschlossen sein, beispielsweise durch mindestens einen Klebestreifen, beispielsweise wenn die Umverpackung mit Packstücken befüllt ist. Dennoch können in diesem beladenen Zustand, in welchem die Öffnung verschlossen ist und in welchem sich mindestens ein Packstück in der Umverpackung befindet, die Griffe durch die Grifföffnungen zugänglich sein, beispielsweise indem diese Griffe und insbesondere die Grifflaschen durch die Grifföffnungen aus dem Beutelelement herausragen.

Die Öffnungen, durch welche die Griffe, insbesondere die Grifflaschen, zugänglich sind, können von einem Bodenteil des Beutelelements insbesondere beabstandet angeordnet sein. Beispielsweise kann diese Beabstandung derart ausgestaltet sein, dass, wenn das Beutelelement das Trägerelement umschließt und das Trägerelement auf dem Bodenteil des Beutelelement aufliegt, die Öffnungen und/oder die Griffe um mindestens 100 mm, vorzugsweise um mindestens 150 mm, von einer Unterseite des Trägerelements entfernt angeordnet sind, beispielsweise von einer Auflagefläche des Trägerelements. Auf diese Weise kann beispielsweise sichergestellt werden, dass, zumindest bei Wasserständen von weniger als 100 mm und vorzugsweise von weniger als 150 mm kein Wasser durch die Öffnungen ins Innere des Beutelelements eindringen kann.

Die erfindungsgemäße Ausgestaltung, bei welcher die Griffe, insbesondere die Grifflaschen, durch die Öffnungen zugänglich sind und insbesondere aus dem Beutelelement herausragen, ist in verschiedener Hinsicht äußerst vorteilhaft. Die Öffnungen oder Grifföffnungen im Beutelelement gewährleisten vorzugsweise jederzeit eine Erreichbarkeit der Griffe des Trägerelements und damit eine gute Handhabbarkeit. Gleichzeitig kann in dieser Ausgestaltung die Schutzwirkung des Beutelelements, beispielsweise gegenüber Feuchtigkeit, mit der hohen Tragkraft des Trägerelements kombiniert werden. Das Beutelelement schützt das Trägerelement, welches vorzugsweise aus einem Kartonmaterial hergestellt werden kann, gegenüber Feuchtigkeit, wohingegen die Last des mindestens einen Packstücks nach wie vor durch das Trägerelement getragen werden kann. Eine zusätzliche Palette oder Platte, auf welche die derartig ausgestaltete Umverpackung aufliegt und/oder transportiert wird, ist nicht erforderlich, da die Umverpackung mittels der Griffe einfach transportiert werden kann. Im Gegensatz hierzu ist beispielsweise bei der Hochwassersicherung für Paletten gemäß DE 3 276 152 ein Transport im geschlossenen Zustand nicht oder nur schwer möglich, da beispielsweise die für den Transport der Palette mittels eines Gabelstaplers vorgesehenen Hohlräume der Palette ebenfalls durch den Beutel verschlossen und damit nicht mehr zugänglich sind.

Die Umverpackung kann insbesondere derart ausgestaltet sein, dass das Beutelelement eine sich zu der Oberseite hin erstreckende Öffnung aufweist. Die Öffnung kann insbesondere verschließbar ausgestaltet sein. Zu diesem Zweck kann die Öffnung beispielsweise mindestens eine Klebelasche aufweisen, beispielsweise eine durch eine Klebefläche und/oder ein Klebeband verschließbare Klebelasche. Beispielsweise kann zum Verschließen der Öffnung ein Rand einer Beutelwand, welche der Öffnung hin zuweist, über einen anderen Rand an der Öffnung geschlagen und mit dieser verklebt werden. Auch andere Arten der verschließbaren Ausgestaltung der mindestens einen Öffnung sind denkbar.

Das Beutelelement kann insbesondere von seinen Abmessungen her an das Trägerelement angepasst sein. Das Trägerelement kann insbesondere eine Rechteckform aufweisen, wobei das Beutelelement vier Seiten aufweist, wobei zumindest zwei einander gegenüberliegende Seiten eine Breite aufweisen, welche mindestens einer Kantenlänge des Randes entspricht. Auf diese Weise können beispielsweise in einem Trägerelement mindestens ein Beutelelement, jedoch grundsätzlich auch mehrere Beutelelemente vorgesehen sein. Auch andere Ausgestaltungen sind grundsätzlich möglich.

Das Trägerelement kann insbesondere von seinen Abmessungen her mit üblichen Paletten, wie beispielsweise Euro-Paletten und/oder World-Paletten, kompatibel ausgestaltet sein. Beispielsweise kann das Trägerelement eine rechteckige Querschnittsfläche aufweisen, mit zwei Kantenlängen, wobei jede Kantenlänge unabhängig voneinander entsprechend einem ganzzahligen Teiler einer Kantenlänge einer Euro-Palette oder einer World-Palette gewählt werden kann. Beispielsweise kann eine Seite des Trägerelements eine Länge aufweisen, welche 1/1, 1/2 , 1/3, 1/4, 1/5 oder 1/6 einer ersten Kantenlänge einer Euro-Palette oder einer World-Palette entspricht. Eine zweite Seite des Trägerelements kann beispielsweise eine Kantenlänge aufweisen, welche ebenfalls 1/1, 1/2, 1/3, 1/4, 1/5 oder 1/6 einer zweiten Kantenlänge einer Euro-Palette bzw. einer World-Palette entspricht. Auf diese Weise kann beispielsweise eine Umverpackung gemäß der vorliegenden Erfindung anstelle oder zusätzlich zu einer Transporteinheit mit einer Euro-Palette oder einer World-Palette in einen Frachtraum eingebracht werden und auf beliebige Weise mit herkömmlichen Frachtstücken kombiniert werden.

Weitere mögliche Ausgestaltungen betreffen das Beutelelement. So kann das Beutelelement insbesondere mindestens einen Folienbeutel umfassen, also als Beutelelement mit einem Folienmaterial als Beutelwand ausgestaltet sein. Insbesondere kann dieser Folienbeutel aus einem Kunststoffmaterial hergestellt sein, welches einlagig oder auch mehrlagig ausgestaltet sein kann. Insbesondere kann das Kunststoffmaterial ausgewählt sein aus der Gruppe bestehend aus: Polyethylen, Polypropylen, Polyethylenterephthalat. Das Kunststoffmaterial kann transparent oder auch intransparent ausgestaltet sein. Sind mehrlagige Materialien vorgesehen, so können diese beispielsweise in einem Coextrusionsverfahren hergestellt werden. Weiterhin können, alternativ oder zusätzlich, grundsätzlich auch metallische Folienmaterialien und/oder Papier-Folienmaterialien eingesetzt werden. Beispielsweise können auch Kunststoff-Metall-Laminatmaterialien eingesetzt werden, beispielsweise metallisch beschichtete Folienbeutel.

Die Umverpackung kann weiterhin auf einer Außenseite des Beutelelements mindestens ein Hinweisetikett umfassen. Dieses Hinweisetikett kann beispielsweise Herkunftshinweise, Inhaltshinweise, Gefahrstoffhinweise, Handhabungshinweise, Zielhinweise, Herstellerhinweise, Adressatenhinweise oder andere Arten von Hinweisen umfassen. Im Gegensatz zu herkömmlichen Transporteinheiten müssen diese Hinweisetiketten, welche beispielsweise ein oder mehrere Papier- und/oder Kunststoffetiketten umfassen können, somit nicht mehr notwendigerweise auf die Packmittel aufgebracht werden, sondern ein oder mehrere Hinweisetiketten auf einer Außenseite des Beutelelements können ausreichend sein. Auf diese Weise kann beispielsweise eine Kennzeichnung gemäß den IATA-Richtlinien gewährleistet sein. Das mindestens eine Hinweisetikett kann beispielsweise aufgeklebt sein, kann jedoch auch grundsätzlich auch auf andere Weise mit dem Beutelelement verbunden sein, beispielsweise durch ein Laminierverfahren und/oder andere Verfahren.

In einem weiteren Aspekt der vorliegenden Erfindung wird ein Verfahren zur Transportsicherung mindestens einer Ware vorgeschlagen. Dabei wird die Ware zumindest teilweise von einem Packmittel umschlossen, vorzugsweise mindestens einem Karton. Dabei wird mindestens ein Packstück gebildet, beispielsweise ein quaderförmiges Packstück. Beispielsweise können im Rahmen des vorliegenden Verfahrens für das Packstück insbesondere Packmittel verwendet werden, welche eine quaderförmige Auflagefläche aufweisen, mit zwei Kantenlängen, welche jeweils unabhängig voneinander ganzzahlige Teiler einer Kantenlänge einer Auflagefläche des Bodenteils sind, beispielsweise 1/1, 1/2, 1/3, 1/4, 1/5, 1/6, 1/7, 1/8, 1/9 oder 1/10.

Das Packstück wird in einer Umverpackung zur Transportsicherung von Packstücken aufgenommen, insbesondere einer Umverpackung gemäß einer oder mehreren der oben beschriebenen Ausgestaltungen, so dass für mögliche Ausgestaltungen der Umverpackung auf die obige Beschreibung verwiesen werden kann. Die Umverpackung weist mindestens ein Trägerelement mit einer Oberseite und einer Unterseite auf, wobei das Trägerelement mindestens ein der Unterseite zuweisendes Bodenteil und mindestens einen der Oberseite zuweisenden Rand umfasst. Das Trägerelement ist zu der Oberseite hin zumindest teilweise geöffnet. Das Packstück wird derart in die Umverpackung eingebracht, dass dieses von dem Trägerelement getragen wird. Die Umverpackung weist weiterhin mindestens ein Beutelelement auf, wobei das Packstück derart in das Beutelelement eingebracht wird, dass das Beutelelement das von dem Trägerelement getragene Packstück umschließt. Das Beutelelement erstreckt sich auf der Oberseite des Trägerelements über den Rand des Trägerelements hinaus.

Je nach Ausgestaltung der Anordnung des Beutelelements und des Trägerelements zueinander kann das mindestens eine Packstück beispielsweise unmittelbar auf dem Bodenteil des Trägerelements aufliegen, wobei sowohl das Trägerelement als auch das Packstück von dem Beutelelement umschlossen werden. Alternativ oder zusätzlich kann das Packstück jedoch auch zunächst in das Beutelelement eingebracht sein und dann mit dem Beutelelement gemeinsam auf das Bodenteil des Trägerelements aufgebracht sein. Dabei können auch mehrere Packstücke in mehreren Lagen übereinander gestapelt sein.

Das vorgeschlagene Verfahren wird insbesondere derart durchgeführt, dass keine zusätzliche Transportpalette verwendet wird, so dass beispielsweise das Trägerelement unmittelbar auf einem Boden eines Frachtraums und/oder auf anderen Transporteinheiten aufliegen kann. Weiterhin kann das Verfahren insbesondere derart durchgeführt werden, dass zusätzlich zu der Umverpackung keine weiteren Sicherungen vorgesehen sind. Insbesondere kann eine Umreifung mit einem oder mehreren Bändern entfallen, wie auch optional ein Kantenschutz entfallen kann.

Das Verfahren kann, wie auch die Umverpackung, insbesondere zur Transportsicherung von Gefahrgütern eingesetzt werden. Das Verfahren ist grundsätzlich für beliebige Transportwege einsetzbar, den Landweg, den Seeweg oder den Luftweg.

Zusammenfassend sind folgende Ausführungen im Rahmen der vorliegenden Erfindung besonders bevorzugt:
Ausführungsform 1: Umverpackung zur Transportsicherung mindestens eines Packstücks, umfassend mindestens ein Trägerelement mit einer Oberseite und einer Unterseite, wobei das Trägerelement mindestens ein der Unterseite zuweisendes Bodenteil und mindestens einen der Oberseite zuweisenden Rand umfasst, wobei das Trägerelement zu der Oberseite hin zumindest teilweise geöffnet ist und eingerichtet ist, um das Packstück zu tragen, wobei die Umverpackung weiterhin mindestens ein Beutelelement umfasst, wobei das Beutelelement eingerichtet ist, um das von dem Trägerelement getragene Packstück zu umschließen, wobei das Beutelelement derart relativ zu dem Trägerelement angeordnet ist, dass sich dieses zumindest in einem maximalen Befüllungszustand auf der Oberseite des Trägerelements über den Rand des Trägerelements hinaus erstreckt, wobei das Trägerelement mindestens zwei Griffe aufweist, wobei das Beutelelement das Trägerelement zumindest teilweise umschließt, wobei das Beutelelement mindestens zwei Öffnungen aufweist, wobei die Griffe durch die Öffnungen zugänglich sind.
Ausführungsform 2: Umverpackung nach der vorhergehenden Ausführungsform, wobei das Beutelelement das Trägerelement derart umschließt, dass das Bodenteil des Trägerelements auf einem Boden des Beutelelements aufliegt.
Ausführungsform 3: Umverpackung nach einer der vorhergehenden Ausführungsformen, wobei das Trägerelement mindestens zwei Grifflaschen aufweist, wobei die Griffe in den Grifflaschen angeordnet sind.
Ausführungsform 4: Umverpackung nach der vorhergehenden Ausführungsform, wobei die Grifflaschen von dem Rand des Trägerelements ausklappbar und/oder ausziehbar sind, insbesondere hin zu der Oberseite.
Ausführungsform 5: Umverpackung nach der vorhergehenden Ausführungsform, wobei die Grifflaschen in einem ausgeklappten und/oder ausgezogenen Zustand seitlich nicht über den Rand vorstehen.
Ausführungsform 6: Umverpackung nach einer der vorhergehenden Ausführungsformen, wobei die Griffe, insbesondere die Grifflaschen, durch die Öffnungen aus dem Beutelelement herausragen.
Ausführungsform 7: Umverpackung nach einer der vorhergehenden Ausführungsformen, wobei die Griffe jeweils mindestens eine Griffverstärkung aufweisen, insbesondere jeweils mindestens eine auf ein Kartonmaterial aufgebrachte Griffverstärkung.
Ausführungsform 8: Umverpackung einer der vorhergehenden Ausführungsformen, wobei das Trägerelement und das Beutelelement miteinander verbunden sind, insbesondere durch eine stoffschlüssige Verbindung, vorzugsweise eine Verklebung.
Ausführungsform 9: Umverpackung nach einer der vorhergehenden Ausführungsformen, wobei das Beutelelement in mindestens einen Aufnahmezustand bringbar ist, wobei in dem Aufnahmezustand ein Beutelrand des Beutelelements umgekrempelt ist, um eine Öffnung des Beutelelements für eine Befüllung mit dem Packstück freizugeben.
Ausführungsform 10: Umverpackung nach einer der vorhergehenden Ausführungsformen, wobei das Trägerelement zumindest teilweise aus einem Material hergestellt ist, ausgewählt aus der Gruppe bestehend aus: einem Kartonmaterial; einem Kunststoffmaterial, insbesondere einem geschäumten Kunststoffmaterial; einem Holzmaterial.
Ausführungsform 11: Umverpackung nach einer der vorhergehenden Ausführungsformen, wobei das Beutelelement eine sich zu der Oberseite hin erstreckende Öffnung aufweist, wobei die Öffnung verschließbar ausgestaltet ist.
Ausführungsform 12: Umverpackung nach einer der vorhergehenden Ausführungsformen, wobei das Trägerelement eine Rechteckform aufweist, wobei das Beutelelement vier Seiten aufweist, wobei zumindest zwei einander gegenüberliegende Seiten eine Breite aufweisen, welche mindestens einer Kantenlänge des Rands entspricht.
Ausführungsform 13: Umverpackung nach einer der vorhergehenden Ausführungsformen, wobei das Beutelelement mindestens einen Folienbeutel umfasst, insbesondere einen Folienbeutel aus einem Kunststoffmaterial, vorzugsweise einem Kunststoffmaterial ausgewählt aus der Gruppe bestehend aus: Polyethylen; Polypropylen; Polyethylenterephthalat.
Ausführungsform 14: Umverpackung nach einer der vorhergehenden Ausführungsformen, wobei auf einer Außenseite des Beutelelements mindestens ein Hinweisetikett aufgebracht ist, vorzugsweise aufgeklebt ist.
Ausführungsform 15: Verfahren zur Transportsicherung mindestens einer Ware, wobei die Ware zumindest teilweise von mindestens einem Packmittel umschlossen wird, vorzugsweise mindestens einem Karton, wobei mindestens ein Packstück gebildet wird, wobei das Packstück in einer Umverpackung zur Transportsicherung mindestens eines Packstücks aufgenommen wird, insbesondere einer Umverpackung nach einem der vorhergehenden Ansprüche, wobei die Umverpackung mindestens ein Trägerelement mit einer Oberseite und einer Unterseite umfasst, wobei das Trägerelement mindestens ein der Unterseite zuweisendes Bodenteil und mindestens einen der Oberseite zuweisenden Rand umfasst, wobei das Trägerelement zu der Oberseite hin zumindest teilweise geöffnet ist, wobei das mindestens eine Packstück derart in die Umverpackung eingebracht wird, dass dieses von dem Trägerelement getragen wird, wobei die Umverpackung weiterhin mindestens ein Beutelelement umfasst, wobei das Packstück derart in das Beutelelement eingebracht wird, dass das Beutelelement das von dem Trägerelement getragene Packstück umschließt, wobei sich das Beutelelement auf der Oberseite des Trägerelements über den Rand des Trägerelements hinaus erstreckt, wobei das Trägerelement mindestens zwei Griffe aufweist, wobei das Beutelelement das Trägerelement zumindest teilweise umschließt, wobei das Beutelelement mindestens zwei Öffnungen aufweist, wobei die Griffe durch die Öffnungen zugänglich sind.

Die vorgeschlagene Umverpackung und das vorgeschlagene Verfahren weisen gegenüber bekannten Umverpackungen und Verfahren zahlreiche Vorteile auf. So kann die Umverpackung insbesondere als kleine Umverpackung (Little Overpack, LOP) eingesetzt werden. Das Trägerelement kann insbesondere als tragbare Grundpalette aus einem stabilen Kartonmaterial ausgestaltet sein. Dadurch lässt sich das Trägerelement kostengünstig ausgestalten, im Gegensatz beispielsweise zu herkömmlichen Transportpaletten aus einem Kunststoffmaterial oder Holzmaterial. Das Trägerelement lässt sich beispielsweise auch faltbar ausgestalten, so dass beispielsweise eine Vielzahl von Trägerelementen in einem gefalteten Zustand angeliefert werden kann, beispielsweise als ebene, noch zu faltende, jedoch vorgeschnittene und/oder vorperforierte Kartonstücke. Das Beutelelement lässt sich insbesondere als verschließbarer Folienbeutel ausgestalten, welcher beispielsweise auf dem Trägerelement fixiert sein kann oder in welchem das Trägerelement fixiert sein kann. In dem Folienbeutel lässt sich insbesondere eine Mehrzahl unterschiedlicher kleinerer Packstücke, insbesondere Packstücken mit Gefahrgutkartons, zusammenfassen, wodurch sich die Kosten und der Handhabungsaufwand für die Versendung dieser einzelnen Packstücke und insbesondere Gefahrgutkartons deutlich reduzieren lassen.

Insbesondere lässt sich durch die Umverpackung eine feste Umreifung der Packstücke, beispielsweise eine Umreifung mit einer Transportpalette als Träger, vermeiden.

Weiterhin lassen sich auch kleine Umverpackungen bilden, welche kostengünstig ausgestaltet werden können und welche insbesondere aufgrund eines möglichen Einwegcharakters der Umverpackung oder von Teilen derselben kostengünstig ausgestaltet werden können. Im Rahmen einer erfindungsgemäßen Umverpackung, insbesondere eines Little Overpacks, kann auf eine Transportpalette als Ladungsträger insgesamt verzichtet werden, wodurch die Kosten des Palettengewichts und die Kosten der Transportpalette selbst eingespart werden können. Die Umverpackung, insbesondere der Little Overpack, ist für praktisch alle Packstückgrößen flexibel einsetzbar. Hierdurch kann ein erheblicher Planungsaufwand beim Zusammenstellen der einzelnen Packstücke vermieden werden. Während bei heutigen Umverpackungen in der Regel eine sinnvolle Anzahl von Packstücken vorhanden sein müssen, beispielsweise mindestens eine Lage Kartons auf einer Palette, bietet die erfindungsgemäße Umverpackung die Möglichkeit, flexibel auch auf Kleinaufträge ab zwei Packstücken zu reagieren, beispielsweise indem diese als Little Overpack abgewickelt werden. Die Umverpackung kann insbesondere auch in einer Transporteinheit eingesetzt werden, bei welcher mehrere Packstücke unterschiedlicher Höhe nebeneinander in einer Ebene aufliegen, da die Verwendung des Beutelelements eine flexible Anpassung der Oberfläche der Trarisporteinheit ermöglicht.

Weiterhin kann ein Zusammenfassen mehrerer Packstücke in einer erfindungsgemäßen Umverpackung zu einer erheblichen Kostenreduktion hinsichtlich Kontrollkosten führen. Beispielsweise führt jegliche Reduzierung von Packstücken, insbesondere in der Luftfracht, zu einer Reduktion von Kontrollgebühren, welche typischerweise bei einer Gefahrgutkontrolle an Flughäfen bei 3 bis 4 EUR pro Packstück liegen.

Weiterhin ist die erfindungsgemäße Umverpackung allgemein einfacher zu handhaben als bisherige Umverpackungen. So kann der oben beschriebene Arbeitsaufwand bei der Herstellung heutiger Umverpackungen mit Transportpaletten als Ladungsträger, auf welche nach Stapelplan Packstücke aufgesetzt und mit einer Folie umwickelt werden, deutlich reduziert werden. Auf die Verwendung einer Folie zur Umwicklung der Transporteinheit kann vollständig verzichtet werden. Der Arbeitsablauf zur Herstellung einer Umverpackung kann insbesondere darauf beschränkt werden, dass Packstücke in das Beutelelement, insbesondere das verschließbare Beutelelements, gepackt werden und dieses Beutelelement anschließend verschlossen wird.

Wie oben beschrieben, kann im Rahmen erfindungsgemäßer Umverpackungen insbesondere auf Transportpaletten verzichtet werden. Dennoch können die Umverpackungen zusätzlich in Kombination mit einer oder mehreren Transportpaletten verwendet werden, beispielsweise einer oder mehreren Euro-Paletten und/oder einer oder mehreren World-Paletten. Beispielsweise kann für zwei Transporteinheiten mit Umverpackungen gemäß der vorliegenden Erfindung eine Euro-Palette verwendet werden. Eine derartige Zusammenfassung mehrerer Transporteinheiten mit jeweils einer Umverpackung gemäß der vorliegenden Erfindung kann insbesondere die Anzahl an Transportpaletten und/oder die Anzahl notwendiger Lagerfächer und/öder Stellplätze in einem Lastkraftwagen und/oder Container reduzieren. Weiterhin lassen sich das Transportgewicht und/oder die Transportkosten erheblich reduzieren. Vorzugsweise erfolgt der Transport derart, dass bei der erfindungsgemäßen Umverpackung die optionalen Transportpaletten nicht mitverladen werden, so dass beispielsweise bei einer Übergabe einer Transporteinheit von einer Stelle des Versands zu einer anderen, beispielsweise von einem Lager an einen Lastkraftwagen, die Transportpalette ortsfest verbleiben kann und die Transporteinheit beispielsweise von der Transportpalette gehoben werden kann. Für dieses Heben können beispielsweise die oben beschriebenen Griffe genutzt werden. Auf diese Weise können beispielsweise die Kosten für die Transportpaletten eingespart werden. Insgesamt lassen sich somit durch die erfindungsgemäße Umverpackung und das erfindungsgemäße Verfahren erhebliche Einsparvolumina hinsichtlich Transportkosten, Lagerkosten und Arbeitskosten realisieren.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigen:
- Figuren 1A bis 1C: verschiedene Ansichten eines ersten Ausführungsbeispiels einer nicht mehr beanspruchten Umverpackung;
- Figur 2: ein Ausführungsbeispiel eines Trägerelements;
- Figuren 3A bis 3C: verschiedene Ansichten eines zweiten, erfindungsmäßen Ausführungsbeispiels einer Umverpackung; und
- Figuren 4A bis 4C: verschiedene Ansichten eines dritten, erfindungsgemäßen Ausführungsbeispiels einer Umverpackung mit durch Öffnungen in einem Beutelelement nach außen ragenden Griffen.

### Ausführungsbeispiele

In den Figuren 1A bis 1C ist ein erstes Ausführungsbeispiel einer nicht mehr beanspruchten Umverpackung 110 in verschiedenen Ansichten gezeigt.

Figur 1A zeigt die Umverpackung 110 in einer perspektivischen Darstellung, in einem bepackten Zustand. Figur 1B zeigt eine Schnittdarstellung durch die Umverpackung in einem Aufnahmezustand, ohne dass Packstücke aufgenommen sind. Figur 1C zeigt die Umverpackung mit darin aufgenommenen Packstücken 112 in einer schematischen Schnittdarstellung. Als Schnittebene in den Figuren 1B und 1C wurde eine Mittelebene der Anordnung in Figur 1A gewählt. Auf diese Figuren wird im Folgenden gemeinsam Bezug genommen.

Die Umverpackung 110 umfasst in dem dargestellten, nicht mehr beanspruchten Ausführungsbeispiel ein Trägerelement 114 in Form eines Trays 116. Dieses Tray 116 weist auf einer Unterseite 118 ein Bodenteil 120 auf, welches, wie beispielsweise aus Figur 1A hervorgeht, eine einer Oberseite 122 der Umverpackung 110 zuweisende Auflagefläche 124 aufweist. Weiterhin weist das Trägerelement 114 einen hochgezogenen Rand 126 auf, welcher in diesem Ausführungsbeispiel das Bodenteil 120 umschließt und sich zu der Oberseite 122 hin erstreckt. Beispielsweise kann der Rand 126 senkrecht zu der Auflagefläche 124 stehen.

Das Trägerelement 114 weist weiterhin in dem dargestellten, nicht mehr beanspruchten Ausführungsbeispiel Griffe 128 auf. Diese Griffe 128 können beispielsweise auf zwei einander gegenüberliegenden Seiten an einer oberen Kante 130 des Rands 126 vorgesehen sein. Die Griffe 128 können beispielsweise in Form von Grifflaschen 132 oder mit derartigen Grifflaschen 132 vorgesehen sein, welche in diesem Ausführungsbeispiel exemplarisch von innen heraus aus dem Rand 126 ausklappbar sind. Beispielsweise kann der Rand 126 ein doppelt gefalteter Kartonrand sein, wobei die Grifflaschen 132 Bestandteil einer Lage dieser doppelten Faltung sein können, wobei beispielsweise eine Faltkante an der oberen Kante 130 vorgesehen sein kann. Die Grifflaschen 132 können sich beispielsweise senkrecht nach oben aus dem Rand 126 heraus erstrecken, so dass sich beispielsweise eng aneinander stehende Umverpackungen 110 gegenseitig nicht behindern und dass dennoch die Umverpackungen 110 leicht greifbar sind.

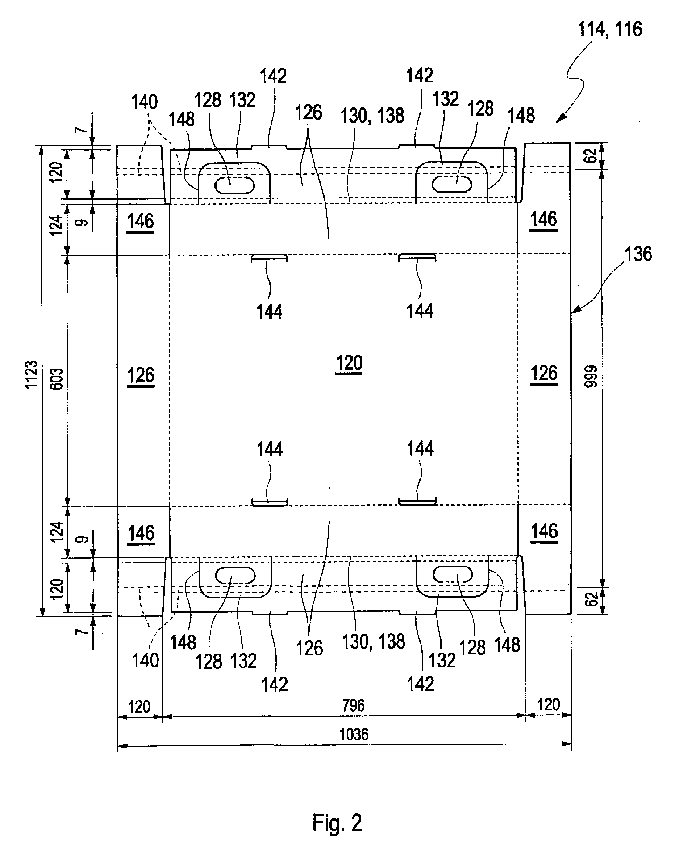

Das Trägerelement 114 kann beispielsweise aus einem Kartonmaterial hergestellt sein. In Figur 2 ist beispielsweise ein Zuschnitt 136 eines derartigen Trägerelements 114 exemplarisch gezeigt, welcher beispielsweise als flaches Kartonstück angeliefert werden kann. Die Maße in dieser Figur 2 sind in mm angegeben und sind lediglich exemplarisch zu verstehen. Auch eine Vielzahl anderer Maße ist denkbar. In diesem Zuschnitt ist deutlich erkennbar, dass der Rand 126 in diesem oder auch in anderen Ausführungsbeispielen beispielsweise an mindestens zwei Seiten, an welchen die Griffe 128 vorgesehen sind, eine Falzlinie 138 aufweisen kann, welche später die obere Kante 130 bildet und entlang derer der Rand 126 umgeschlagen werden kann. Entlang dieser Seite des Randes 126 kann in dem Zuschnitt 136 optional beispielsweise auch, wie auch optional an anderen Stellen des Zuschnitts 136, mindestens ein Verstärkungsband 140 vorgesehen sein. An den Kanten kann der Rand 126 Laschen 142 aufweisen, welche nach entsprechender Faltung an der Falzlinie 138 in entsprechende Öffnungen 144 am Rand des Bodenteils 120 einsteckbar sind. Auf den Seiten des Rands 126, an welchen keine Griffe 128 vorgesehen sind, kann der Rand 126 einfach ausgestaltet sein, beispielsweise mit Laschen 146, welche beim Zusammenfalten des Zuschnitts 136 zwischen die Lagen des gefalteten Randes 126 auf der Seite, auf welcher die Griffe 128 angeordnet sind, gesteckt werden können. Nach dem Zusammenbau des Zuschnitts 136 zu dem Tray 116 gemäß den Figuren 1A bis 1C können optional die Grifflaschen 132 entlang einer Perforation 148 ausgeklappt werden. Auf diese Weise entsteht ein stabiles Trägerelement 114, welches vorzugsweise in Alleinstellung verwendet werden kann, welches jedoch grundsätzlich auch zusätzlich direkt oder indirekt auf eine Transportpalette aufgesetzt werden kann.

Wie insbesondere aus der perspektivischen Darstellung gemäß Figur 1A und aus der Schnittdarstellung in Figur 1C hervorgeht, ist bei dem nicht mehr beanspruchten Ausführungsbeispiel im Inneren des Trägerelements 114 ein Beutelelement 150 eingebracht. Das Beutelelement 150 ist in Figur 1A exemplarisch und zur Verdeutlichung des Aufbaus transparent dargestellt. Auch andere Ausgestaltungen sind jedoch möglich. Anstelle der bevorzugten Ausgestaltung mit einem einzelnen Beutelelement 150 sind auch Ausgestaltungen mit mehreren Beutelelementen 150 möglich, welche nebeneinander angeordnet sein können und/oder welche ineinander verschachtelt angeordnet sein können. Das Beutelelement 150 kann beispielsweise eine flexible Beutelwand 152 umfassen, mit einem Boden 154, welcher in diesem Ausführungsbeispiel auf der Auflagefläche 124 des Bodenteils 120 aufliegt. Optional können der Boden 154 und die Auflagefläche 124 miteinander verbunden sein, beispielsweise stoffschlüssig, beispielsweise mittels eines oder mehrerer doppelseitiger Klebebänder 156, wie in den Figuren 1B und 1C angedeutet.

Auf mindestens einer Außenseite des Beutelelements 150, die für einen Betrachter oder Benutzer sichtbar ist, kann insbesondere mindestens ein Hinweisetikett 153 aufgebracht sein, welches in Figur 1A schematisch angedeutet ist. Dieses Hinweisetikett 153 kann beispielsweise auf der Außenseite aufgeklebt oder auflaminiert sein.

Das Beutelelement 150 weist auf seiner der Oberseite 122 zuweisenden Seite eine Öffnung 158 auf. In dem befüllten Zustand gemäß den Figuren 1A und 1C, in welchem in die Umverpackung 110 ein oder mehrere Packstücke 112 eingebracht sind, so dass eine Transporteinheit 160 entsteht, kann die Öffnung 158 verschlossen ausgestaltet sein. Dieses Verschließen kann beispielsweise mittels mindestens eines Verschlusselements 162 erfolgen, insbesondere mittels mindestens einer Klebelasche 164. Alternativ oder zusätzlich kann ein Klebestreifen und/oder eine andere Art von Verschlusselement 162 vorgesehen sein.

Das Beutelelement 150 kann beispielsweise als Folienbeutel 166 ausgestaltet sein. Beispielsweise kann der Folienbeutel 166 ein Kunststoff-Folienbeutel sein, beispielsweise aus einem PE-Material und/oder einem anderen Kunststoffmaterial. Auch mehrlagige Folienbeutel 166 sind denkbar. Alternativ oder zusätzlich zu Kunststoffmaterialien sind beispielsweise in diesem oder auch in anderen Ausführungsbeispielen auch metallische Materialien einsetzbar und/oder Verbundmaterialien, beispielsweise Kunststoff-Metall-Verbundmaterialien, beispielsweise metallisch beschichtete Kunststofffolienbeutel. Verschiedene Ausgestaltungen sind aus dem Stand der Technik grundsätzlich bekannt.

In Figur 1B ist ein Aufnahmezustand der Umverpackung 110 dargestellt, in welchem noch keine Packstücke 112 in die Umverpackung 110 eingebracht sind. In diesem Aufnahmezustand kann beispielsweise ein der Öffnung 158 zuweisender Beutelrand 168 umgekrempelt sein, wobei ein Krempeln nach innen oder auch nach außen möglich ist. Auf diese Weise wird die Öffnung 158 freigegeben, so dass Packstücke 112 (in Figur 1B nicht dargestellt) in die Öffnung 144 eingebracht werden können, in einer oder mehreren Lagen übereinander. Anschließend kann der Beutelrand 168 aufgekrempelt und über die Oberseite der Packstücke 112 geschlagen werden, und die Öffnung 158 kann verschlossen werden.

Aus der Schnittdarstellung der Umverpackung 110 und der Transporteinheit 160 gemäß Figur 1C ergibt sich, dass die Packstücke 112 selbst jeweils mindestens ein Packmittel 170 umfassen können. Dieses Packmittel 170 kann beispielsweise einen Karton umfassen, beispielsweise einen quaderförmigen Karton. Im Inneren des Packmittels 170 können weitere Packmittel vorgesehen sein, beispielsweise Füllstoffe 172. Weiterhin ist im Inneren der Packmittel 170 jeweils mindestens eine Ware 174 aufgenommen, welche in Figur 1C schematisch dargestellt ist. Auch das Verpacken mehrerer Waren 174 im Inneren eines Packmittels 170 ist denkbar. Die Waren 174 können beispielsweise flüssiger, fester oder gasförmiger Natur sein und können ihrerseits wiederum mindestens eine Primärverpackung aufweisen (in Figur 1C nicht dargestellt), beispielsweise eine Flasche, einen Beutel, einen Karton, ein Blisterpack oder ähnliche Primärverpackungen. In Figur 1C ist dabei dargestellt, dass nur eine Lage von Packstücken 112 auf die Auflagefläche 124 des Bodenteils 120 aufgebracht ist. Auch Ausgestaltungen mit mehrlagiger Aufbringung sind jedoch denkbar. In der Darstellung gemäß Figur 1A, in welcher das Beutelelement 150 exemplarisch transparent dargestellt ist, ist lediglich ein Packstück 112 dargestellt. Diese Darstellung zeigt, dass beispielsweise die Packstücke 112 Kantenabmessungen aufweisen können, dergestalt, dass zumindest entlang einer Seite, bevorzugt entlang beider Seiten des Trägerelements 114 eine ganzzahlige Anzahl derartiger Packstücke 112 vorgesehen sein kann.

In den Figuren 3A bis 3C ist ein erfindungsgemäßes weiteres Ausführungsbeispiel einer Umverpackung 110 dargestellt, bezüglich dessen Ausgestaltung zunächst weitgehend auf die Beschreibung des nicht mehr beanspruchten Ausführungsbeispiels gemäß den Figuren 1A bis 1C sowie die dort beschriebenen Elemente verwiesen werden kann. Wiederum ist das Beutelelement 150 in Figur 3A exemplarisch und zur Vereinfachung der Darstellung transparent gezeigt, ohne Beschränkung weiterer Ausführungsformen.

Im Unterschied zu der Ausgestaltung gemäß den Figuren 1A bis 1C sind in der Umverpackung 110 gemäß den Figuren 3A bis 3C das Beutelelement 150 und das Trägerelement 114 jedoch in einer Weise zueinander angeordnet, dass das Beutelelement 150 das Trägerelement 114 umschließt. Dieses Umschließen erfolgt derart, dass das Bodenteil 120 des Trägerelements 114 auf dem Boden 154 des Beutelelements 150 aufliegt. Optional können zwischen der Unterseite des Bodenteils 120 und dem Boden 154 des Beutelelements 150 wiederum ein oder mehrere Klebebänder 156 vorgesehen sein, um das Beutelelement 150 relativ zu dem Trägerelement 114 zu fixieren.

In einem in Figur 3B dargestellten Aufnahmezustand, welcher grundsätzlich dem Aufnahmezustand gemäß Figur 1B entspricht und in welchem beispielsweise Packstücke 112 (in Figur 3B nicht dargestellt) in eine Öffnung 158 des Beutelelements 150 und gleichzeitig auf die Auflagefläche 124 des Trägerelements 114 ein- bzw. aufgebracht werden können, kann wiederum optional ein Beutelrand 168 des Beutelelements 150 umgekrempelt sein, beispielsweise nach außen, wie in Figur 3B dargestellt.

Das Beutelelement 150 umfasst Öffnungen 176, welche in den Figuren 3A symbolisch angedeutet sind. Durch diese Öffnungen 176 sind für einen Benutzer die Griffe 128 und optional die Grifflaschen 132 zugänglich. Diese Öffnungen 176 können beispielsweise, wie in Figur 3A erkennbar, Perforationen 178 in der Beutelwand 152 umfassen, welche an Stellen angeordnet sind, dass durch diese Perforationen 178, gegebenenfalls nach Aufreißen derselben, die Griffe 128 zugänglich sind. Optional können durch diese Öffnungen 176 die Grifflaschen 132 nach außen geklappt werden, so dass beispielsweise die Grifflaschen 132 von dem Inneren des Beutelelements 150 aus durch die Öffnungen 176 nach außen ragen, was in den Figuren nicht dargestellt ist.

Im Gegensatz zur Ausgestaltung gemäß den Figuren 1A bis 1C kann sich also bei der erfindungsgemäßen Ausgestaltung gemäß den Figuren 3A bis 3C das Tray 116 im Inneren des Beutelelements 150 befinden. Das Beutelelement 150, bei welchem es sich beispielsweise um eine Tüte handeln kann, kann mit den Perforationen 178 ausgestaltet sein, durch welche die Grifflaschen 132, beispielsweise als Tragegriffe, im Bedarfsfall aus dem Beutelelement 150 herausgeführt sein können (hier nicht dargestellt) oder durch welche die Grifflaschen 132 gefasst werden können. Die in Figur 3B dargestellte Situation, nach welcher das Beutelelement 150 gekrempelt ausgestaltet sein kann, ist insbesondere in diesem Ausführungsbeispiel, bei welchem das Trägerelement 114 in das Beutelelement 150 eingebracht ist, nicht unbedingt erforderlich, da die Steifheit des Trägerelements 114 vorzugsweise die Öffnung 158 des Beutelelements 150 für ein Beladen mit Packstücken 112 offenhält. Nach dem Beladen kann das Beutelelement 150 über die Packstücke 112 geschlagen und optional, wie in Figur 3A gezeigt, verschlossen werden.

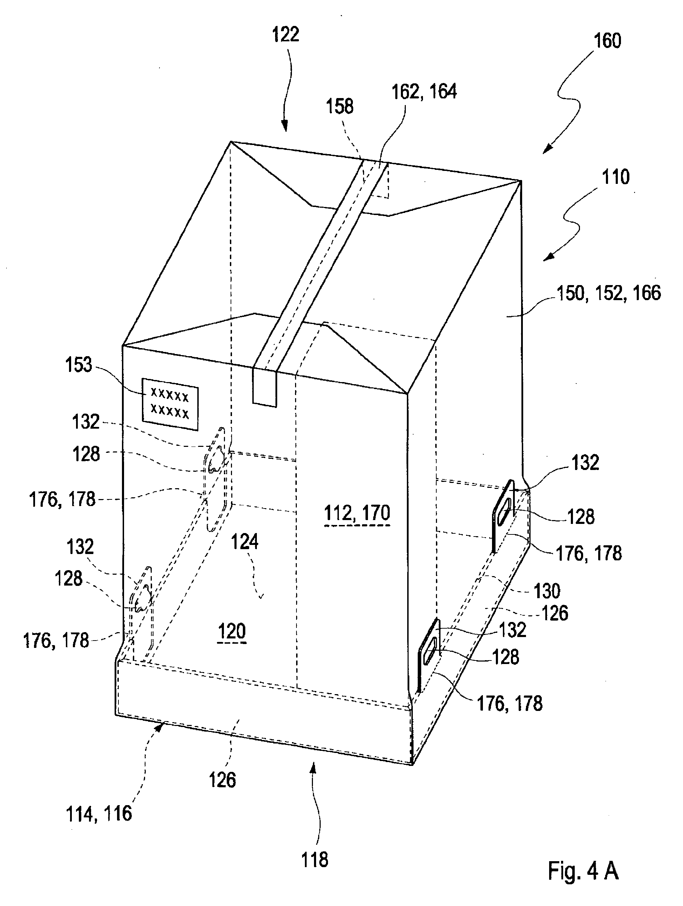

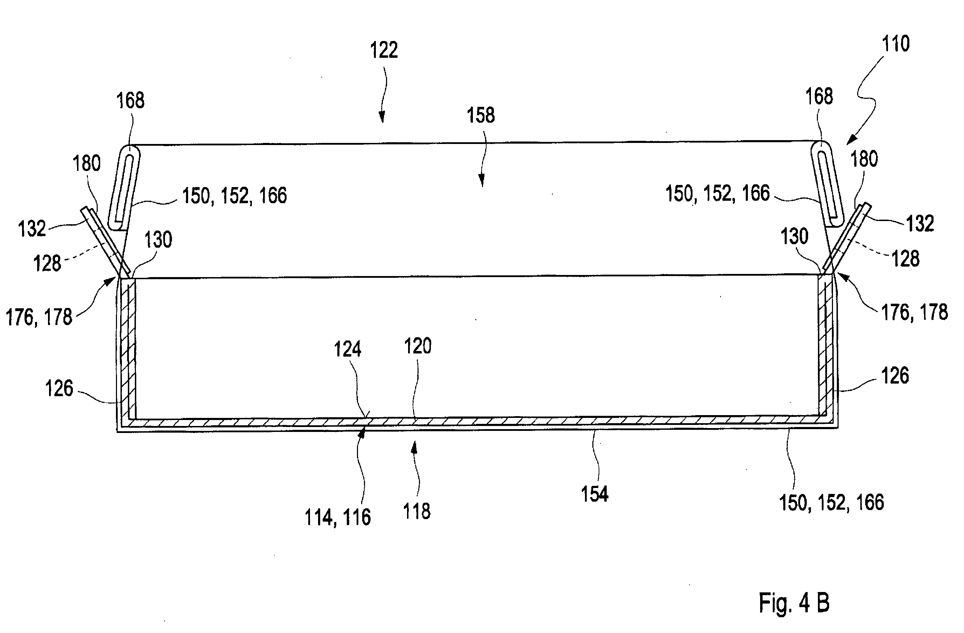

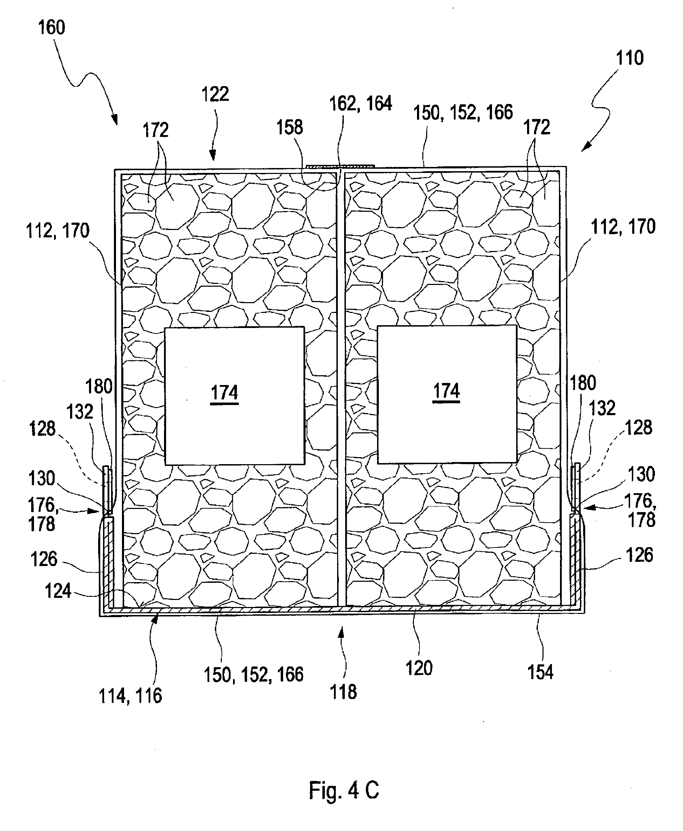

In den Figuren 4A bis 4C sind verschiedene Ansichten und verschiedene Zustände eines erfindungsgemäßen dritten Ausführungsbeispiels einer Umverpackung 110 dargestellt. Das Ausführungsbeispiel entspricht in weiten Teilen dem Ausführungsbeispiel gemäß den Figuren 3A bis 3C, so dass weitgehend auf die obige Beschreibung dieser Figuren verwiesen werden kann. Wiederum ist bei diesem Ausführungsbeispiel ein Trägerelement 114 mit samt darauf aufgebrachtem Packstück 112 (wobei auch mehrere Packstücke vorgesehen sein können) in ein Beutelelement 150 eingebracht, so dass das Trägerelement 114 ganz oder teilweise von dem Beutelelement umschlossen ist. Während in Figur 3A das Beutelelement 150 transparent dargestellt ist, was nicht notwendigerweise auf transparente Eigenschaften des Beutelelements 150 schließen lassen muss, sind in dem Ausführungsbeispiel gemäß Figur 4A in den Darstellung das Trägerelement 114 und das Packstück 112 strichliert dargestellt, um die Anordnung dieser Elemente im Inneren des Beutelelements 150 stärker hervorzuheben. Ansonsten entspricht die Darstellung in Figur 4A der Darstellung in Figur 3A. Während Figur 4A eine perspektivische Darstellung der Umverpackung 110 in einem befüllten und geschlossenen Zustand zeigt, zeigt Figur 4B, analog zur Darstellung in Figur 3B, einen Aufnahmezustand der Umverpackung 110, in welcher ein Beutelrand 168 des Beutelelements 150 umgekrempelt ist, um eine Öffnung 158 des Beutelelements 150 für eine Befüllung mit dem mindestens einem Packstück 112 freizugeben. Figur 4C zeigt, in analoger Darstellung zu Figur 3C, einen Schnitt durch die Umverpackung 110 in einem befülltem Zustand, in welchem die Öffnung 158 verschlossen ist.

Das Ausführungsbeispiel in den Figuren 4A bis 4C entspricht somit weitgehend dem Ausführungsbeispiel in den Figuren 3A bis 3C. Wiederum weist das Beutelelement 150 Öffnungen 176 auf, welche auch als Grifföffnungen bezeichnet werden können, beispielsweise schlitzförmige Öffnungen 176, insbesondere Perforationen 178 in einer Beutelwand 152 des Beutelelements 150. Diese Öffnungen 176 können vorzugsweise von der Unterseite 118 des Trägerelements 114 einen Abstand von mindestens 100 mm aufweisen. Während bei dem Ausführungsbeispiel in den Figuren 3A bis 3C Griffe 128 des Trägerelements 114 im Inneren des Beutelelements 150 angeordnet sind, ragen in dem Ausführungsbeispiel gemäß den Figuren 4A bis 4C die Griffe 128, insbesondere Grifflaschen 132, durch die Öffnungen 176 aus dem Beutelelement 150 heraus. Dementsprechend sind die Grifflaschen 132 in der Darstellung gemäß Figur 4A auf der rechten Seite nicht strichliert dargestellt. Die Grifflaschen 128 können senkrecht von der oberen Kante 130 des Trägerelements 114 nach oben ragen, wie in den Figuren 4A und 4C dargestellt, können jedoch auch, wie in Figur 4B gezeigt, seitlich abgeklappt werden. Die Ausgestaltung, bei welcher die Griffe 128 und insbesondere die Grifflaschen 132 durch die Öffnungen 176 nach außen ragen, weist, wie oben ausgeführt, zahlreiche Vorteile auf. So wird in dieser Ausgestaltung einerseits das Trägerelement 114, welches vorzugsweise aus einem Kartonmaterial hergestellt sein kann, durch das Beutelelement 150 ganz oder teilweise umschlossen und dadurch vor Feuchtigkeit geschützt. Gleichzeitig sind die Griffe 128 jedoch von außen auch im verpackten Zustand, beispielsweise in dem in Figur 4A dargestellten geschlossenen Zustand der Umverpackung 110, für einen Transport gut zugänglich.

Wie in Figur 4B dargestellt, können in dem Aufnahmezustand, bei welchem der Beutelrand 168 umgekrempelt ist, die Griffe 128 und insbesondere die Grifflaschen 132 sowie die Öffnungen 176 unterhalb des umgekrempelten Beutelrands 168 angeordnet sein. Auch andere Ausgestaltungen sind möglich.

Weiterhin zeigt das Ausführungsbeispiel in den Figuren 4A bis 4C weitere mögliche Abwandlungen des Ausführungsbeispiels gemäß den Figuren 3A bis 3C, welche auch einzeln oder in beliebiger Kombination realisierbar sind, auch beispielsweise in dem Ausführungsbeispiel gemäß den Figuren 3A bis 3C. So zeigt das Ausführungsbeispiel in den Figuren 4A bis 4C, wie insbesondere aus den Figuren 4B und 4C ersichtlich ist, dass eine Verbindung zwischen dem Beutelelement 150 und dem Trägerelement 114 nicht notwendigerweise erforderlich ist. Insbesondere kann, wenn das Trägerelement 114 ganz oder teilweise von dem Beutelelement 150 umschlossen ist, auf eine Fixierung des Trägerelements 114 an dem Beutelelement 150, beispielsweise durch Klebebänder 156 wie in den Figuren 3A bis 3C, verzichtet werden. Das Trägerelement 114 kann somit insbesondere lose auf dem Beutelelement 150 aufliegen, das insbesondere in dem in Figur 4A gezeigten geschlossenen Zustand ein Verrutschen des Trägerelements 114 relativ zu dem Beutelelement 150 kaum mehr möglich ist.

Weiterhin zeigt die Ausgestaltung in den Figuren 4A bis 4C, was ebenfalls insbesondere in der Darstellung gemäß den Figuren 4B bis 4C ersichtlich ist, dass die Griffe 128 und insbesondere die Grifflaschen 132 in diesem oder auch in anderen Ausführungsbeispielen verstärkt ausgestaltet sein können. Insbesondere können die Griffe 128 jeweils mindestens eine Griffverstärkung 180 aufweisen. Die mindestens eine Griffverstärkung 180 kann beispielsweise die Griffe 128 vollständig oder teilweise umschließen. Beispielsweise kann diese Griffverstärkung 180 auf ein Kartonmaterial des Trägerelements 114 im Bereich der Griffe 128 aufgebracht sein. Insbesondere kann die Griffverstärkung 180 ganz oder teilweise aus einem Klebeband hergestellt sein, welches insbesondere auf die Grifflaschen 132 aufgeklebt ist, beispielsweise auf eine Innenseite (wie in den Figuren 4B und 4D dargestellt) und/oder einer Außenseite der Grifflaschen 132.

**Bezugszeichenliste**

| | | | |
|---|---|---|---|
| 110 | Umverpackung | 176 | Öffnungen |
| 112 | Packstück | 178 | Perforation |
| 114 | Trägerelement | 180 | Griffverstärkung |
| 116 | Tray | | |
| 118 | Unterseite | | |
| 120 | Bodenteil | | |
| 122 | Oberseite | | |
| 124 | Auflagefläche | | |
| 126 | Rand | | |
| 128 | Griffe | | |
| 130 | obere Kante | | |
| 132 | Grifflaschen | | |
| 136 | Zuschnitt | | |
| 138 | Falzlinie | | |
| 140 | Verstärkungsband | | |
| 142 | Laschen | | |
| 144 | Öffnungen | | |
| 146 | Laschen | | |
| 148 | Perforation | | |
| 150 | Beutelelement | | |
| 152 | Beutelwand | | |
| 153 | Hinweisetikett | | |
| 154 | Boden | | |
| 156 | Klebebänder | | |
| 158 | Öffnung | | |
| 160 | Transporteinheit | | |
| 162 | Verschlusselement | | |
| 164 | Klebelasche | | |
| 166 | Folienbeutel | | |
| 168 | Beutelrand | | |
| 170 | Packmittel | | |
| 172 | Füllstoffe | | |
| 174 | Ware | | |

## Patentansprüche

1. Umverpackung (110) zur Transportsicherung mindestens eines Packstücks (112), umfassend mindestens ein Trägerelement (114) mit einer Oberseite (122) und einer Unterseite (118), wobei das Trägerelement (114) mindestens ein der Unterseite (118) zuweisendes Bodenteil (120) und mindestens einen der Oberseite (122) zuweisenden Rand (126) umfasst, wobei das Trägerelement (114) zu der Oberseite (122) hin zumindest teilweise geöffnet ist und eingerichtet ist, um das Packstück (112) zu tragen, wobei die Umverpackung (110) weiterhin mindestens ein Beutelelement (150) umfasst, wobei das Beutelelement (150) eingerichtet ist, um das von dem Trägerelement (114) getragene Packstück (112) zu umschließen, wobei das Beutelelement (150) derart relativ zu dem Trägerelement (114) angeordnet ist, dass sich dieses zumindest in einem maximalen Befüllungszustand auf der Oberseite (122) des Trägerelements (114) über den Rand (126) des Trägerelements (114) hinaus erstreckt, wobei das Trägerelement (114) mindestens zwei Griffe (128) aufweist, wobei das Beutelelement (150) das Trägerelement (114) zumindest teilweise umschließt, wobei das Beutelelement (150) mindestens zwei Öffnungen (176) aufweist, wobei die Griffe (128) durch die Öffnungen (176) zugänglich sind.

2. Umverpackung (110) nach dem vorhergehenden Anspruch, wobei das Beutelelement (150) das Trägerelement (114) derart umschließt, dass das Bodenteil (120) des Trägerelements (114) auf einem Boden (154) des Beutelelements (150) aufliegt.

3. Umverpackung (110) nach einem der vorhergehenden Ansprüche, wobei das Trägerelement (114) mindestens zwei Grifflaschen (132) aufweist, wobei die Griffe (128) in den Grifflaschen (132) angeordnet sind.

4. Umverpackung (110) nach dem vorhergehenden Anspruch, wobei die Grifflaschen (132) von dem Rand (126) des Trägerelements (114) ausklappbar und/oder ausziehbar sind, insbesondere hin zu der Oberseite (122).

5. Umverpackung (110) nach dem vorhergehenden Anspruch, wobei die Grifflaschen (132) in einem ausgeklappten und/oder ausgezogenen Zustand seitlich nicht über den Rand (126) vorstehen.

6. Umverpackung (110) nach einem der vorhergehenden Ansprüche, wobei die Griffe (128), insbesondere die Grifflaschen (132), durch die Öffnungen (176) aus dem Beutelelement (150) herausragen.

7. Umverpackung (110) nach einem der vorhergehenden Ansprüche, wobei die Griffe (128) jeweils mindestens eine Griffverstärkung (180) aufweisen, insbesondere jeweils mindestens eine auf ein Kartonmaterial aufgebrachte Griffverstärkung (180).

8. Umverpackung (110) nach einem der vorhergehenden Ansprüche, wobei das Beutelelement (150) in mindestens einen Aufnahmezustand bringbar ist, wobei in dem Aufnahmezustand ein Beutelrand (168) des Beutelelements (150) umgekrempelt ist, um eine Öffnung (158) des Beutelelements (150) für eine Befüllung mit dem Packstück (112) freizugeben.

9. Umverpackung (110) nach einem der vorhergehenden Ansprüche, wobei das Trägerelement (114) zumindest teilweise aus einem Material hergestellt ist, ausgewählt aus der Gruppe bestehend aus: einem Kartonmaterial; einem Kunststoffmaterial, insbesondere einem geschäumten Kunststoffmaterial; einem Holzmaterial.

10. Umverpackung (110) nach einem der vorhergehenden Ansprüche, wobei das Trägerelement (114) eine Rechteckform aufweist, wobei das Beutelelement (150) vier Seiten aufweist, wobei zumindest zwei einander gegenüberliegende Seiten eine Breite aufweisen, welche mindestens einer Kantenlänge des Rands (126) entspricht.

11. Umverpackung (110) nach einem der vorhergehenden Ansprüche, wobei das Beutelelement (150) mindestens einen Folienbeutel (166) umfasst, insbesondere einen Folienbeutel (166) aus einem Kunststoffmaterial, vorzugsweise einem Kunststoffmaterial ausgewählt aus der Gruppe bestehend aus: Polyethylen; Polypropylen; Polyethylenterephthalat.

12. Umverpackung (110) nach einem der vorhergehenden Ansprüche, wobei auf einer Außenseite des Beutelelements (150) mindestens ein Hinweisetikett (153) aufgebracht ist, vorzugsweise aufgeklebt ist.

13. Verfahren zur Transportsicherung mindestens einer Ware (174), wobei die Ware (174) zumindest teilweise von mindestens einem Packmittel (170) umschlossen wird, vorzugsweise mindestens einem Karton, wobei mindestens ein Packstück (112) gebildet wird, wobei das Packstück (112) in einer Umverpackung (110) zur Transportsicherung mindestens eines Packstücks (112) aufgenommen wird, wobei die Umverpackung (110) mindestens ein Trägerelement (114) mit einer Oberseite (122) und einer Unterseite (118) umfasst, wobei das Trägerelement (114) mindestens ein der Unterseite (118) zuweisendes Bodenteil (120) und mindestens einen der Oberseite (122) zuweisenden Rand (126) umfasst, wobei das Trägerelement (114) zu der Oberseite (122) hin zumindest teilweise geöffnet ist, wobei das mindestens eine Packstück (112) derart in die Umverpackung (110) eingebracht wird, dass dieses von dem Trägerelement (114) getragen wird, wobei die Umverpackung (110) weiterhin mindestens ein Beutelelement (150) umfasst, wobei das Packstück (112) derart in das Beutelelement (150) eingebracht wird, dass das Beutelelement (150) das von dem Trägerelement (114) getragene Packstück (112) umschließt, wobei sich das Beutelelement (150) auf der Oberseite (122) des Trägerelements (114) über den Rand (126) des Trägerelements (114) hinaus erstreckt, wobei das Trägerelement (114) mindestens zwei Griffe (128) aufweist, wobei das Beutelelement (150) das Trägerelement (114) zumindest teilweise umschließt, wobei das Beutelelement (150) mindestens zwei Öffnungen (176) aufweist, wobei die Griffe (128) durch die Öffnungen (176) zugänglich sind.

## Claims

1. External packaging (110) for safeguarding at least one package (112) during transportation, comprising at least one carrier element (114) with an upper side (122) and a lower side (118), wherein the carrier element (114) comprises at least one base part (120) directed toward the lower side (118) and at least one border (126) directed toward the upper side (122), wherein the carrier element (114) is at least partially open toward the upper side (122) and is designed to carry the package (112), wherein the external packaging (110) furthermore comprises at least one bag element (150), wherein the bag element (150) is designed to surround the package (112) carried by the carrier element (114), wherein the bag element (150) is arranged relative to the carrier element (114) in such a manner that said bag element, at least in a maximum filling state, extends on the upper side (122) of the carrier element (114) beyond the border (126) of the carrier element (114) wherein the carrier element (114) has at least two handles (128), wherein the bag element (150) at least partially surrounds the carrier element (114), wherein the bag element (150) has at least two openings (176), wherein the handles (128) are accessible through the openings (176) .

2. External packaging (110) according to the preceding claim, wherein the bag element (150) surrounds the carrier element (114) in such a manner that the base part (120) of the carrier element (114) rests on a base (154) of the bag element (150).

3. External packaging (110) according to one of the preceding claims, wherein the carrier element (114) has at least two handle tabs (132), wherein the handles (128) are arranged in the handle tabs (132) .

4. External packaging (110) according to the preceding claim, wherein the handle tabs (132) are outwardly pullable and/or are extendible from the border (126) of the carrier element (114), in particular toward the upper side (122).

5. External packaging (110) according to the preceding claim, wherein, in a pulled-out and/or extended state, the handle tabs (132) do not protrude laterally over the border (126).

6. External packaging (110) according to one of the preceding claims, wherein the handles (128), in particular the handle tabs (132), project out of the bag element (150) through the openings (176).

7. External packaging (110) according to one of the preceding claims, wherein the handles (128) each have at least one handle reinforcement (180), in particular each have at least one handle reinforcement (180) mounted onto a carton material.

8. External packaging (110) according to one of the preceding claims, wherein the bag element (150) is bringable into at least one receiving state, wherein, in the receiving state, a bag border (168) of the bag element (150) is turned over in order to open up an opening (158) in the bag element (150) for filling with the package (112).

9. External packaging (110) according to one of the preceding claims, wherein the carrier element (114) is at least partially produced from a material, selected from the group consisting of: a carton material; a plastics material, in particular a foamed plastics material; a wood material.

10. External packaging (110) according to one of the preceding claims, wherein the carrier element (114) has a rectangular shape, wherein the bag element (150) has four sides, wherein at least two mutually opposite sides have a width which corresponds at least to an edge length of the border (126).

11. External packaging (110) according to one of the preceding claims, wherein the bag element (150) comprises at least one film bag (166), in particular a film bag (166) made of a plastics material, preferably a plastics material selected from the group consisting of: polyethylene; polypropylene; polyethylene terephthalate.

12. External packaging (110) according to one of the preceding claims, wherein at least one information label (153) is applied, preferably adhesively bonded, on an outer side of the bag element (150).

13. Method for safeguarding at least one product (174) during transportation, wherein the product (174) is at least partially surrounded by at least one packing means (170), preferably at least one carton, wherein at least one package (112) is formed, wherein the package (112) is accommodated in an external packaging (110) for safeguarding at least one package (112) during transportation, wherein the external packaging (110) comprises at least one carrier element (114) with an upper side (122) and a lower side (118), wherein the carrier element (114) comprises at least one base part (120) directed toward the lower side (118) and at least on border (126) directed toward the upper side (122), wherein the carrier element (114) is at least partially open toward the upper side (122), wherein the at least one package (112) is introduced into the external packaging (110) in such a manner that said package is carried by the carrier element (114), wherein the external packaging (110) furthermore comprises at least one bag element (150), wherein the package (112) is introduced into the bag element (150) in such a manner that the bag element (150) surrounds the package (112) carried by the carrier element (114), wherein the bag element (150) extends on the upper side (122) of the carrier element (114) beyond the border (126) of the carrier element (114), wherein the carrier element (114) has at least two handles (128), wherein the bag element (150) at least partially surrounds the carrier element (114), wherein the bag element (150) has at least two openings (176), wherein the handles (128) are accessible through the openings (176).

## Revendications

1. Emballage extérieur (110) destiné à une sécurisation du transport d'au moins un conditionnement (112), comprenant au moins un élément de support (114) avec un côté supérieur (122) et un côté inférieur (118), l'élément de support (114) comprenant au moins une pièce de fond (120) tournée vers le côté inférieur (118) et au moins un bord (126) tourné vers le côté supérieur (122), l'élément de support (114) étant au moins partiellement ouvert vers le côté supérieur (122) et agencé pour supporter le conditionnement (112), l'emballage extérieur (110) comprenant en outre au moins un élément formant sachet (150), l'élément formant sachet (150) étant agencé pour enfermer le conditionnement (112) supporté par l'élément de support (114), l'élément formant sachet (150) étant agencé par rapport à l'élément de support (114) de manière à s'étendre au moins dans un état de remplissage maximal sur le côté supérieur (122) de l'élément de support (114) au-delà du bord (126) de l'élément de support (114), l'élément de support (114) présentant au moins deux poignées (128), l'élément formant sachet (150) enfermant au moins partiellement l'élément de support (114), l'élément formant sachet (150) présentant au moins deux ouvertures (176), les poignées (128) étant accessibles à travers les ouvertures (176).

2. Emballage extérieur (110) selon la revendication précédente, l'élément formant sachet (150) enfermant l'élément de support (114) de sorte que la pièce de fond (120) de l'élément de support (114) repose sur un fond (154) de l'élément formant sachet (150).

3. Emballage extérieur (110) selon l'une quelconque des revendications précédentes, l'élément de support (114) présentant au moins deux anses de poignée (132), les poignées (128) étant agencées dans les anses de poignée (132).

4. Emballage extérieur (110) selon la revendication précédente, les anses de poignée (132) pouvant être dépliées et/ou tirées à partir du bord (126) de l'élément de support (114), en particulier en direction du côté supérieur (122).

5. Emballage extérieur (110) selon la revendication précédente, les anses de poignée (132) ne dépassant pas latéralement par-dessus le bord (126) dans un état déplié et/ou tiré.

6. Emballage extérieur (110) selon l'une quelconque des revendications précédentes, les poignées (128), en particulier les anses de poignée (132), faisant saillie hors de l'élément formant sachet (150) à travers les ouvertures (176).

7. Emballage extérieur (110) selon l'une quelconque des revendications précédentes, les poignées (128) présentant respectivement au moins un renforcement de poignée (180), en particulier respectivement au moins un renforcement de poignée (180) appliqué sur un matériau à base de carton.

8. Emballage extérieur (110) selon l'une quelconque des revendications précédentes, l'élément formant sachet (150) pouvant être amené dans au moins un état de réception, un bord de sachet (168) de l'élément formant sachet (150) étant retroussé, dans l'état de réception, afin de libérer une ouverture (158) de l'élément formant sachet (150) en vue d'un remplissage avec le conditionnement (112).

9. Emballage extérieur (110) selon l'une quelconque des revendications précédentes, l'élément de support (114) étant fabriqué au moins partiellement à partir d'un matériau sélectionné parmi le groupe constitué de : un matériau à base de carton ; une matière plastique, en particulier une matière plastique expansée en mousse ; un matériau à base de bois.

10. Emballage extérieur (110) selon l'une quelconque des revendications précédentes, l'élément de support (114) présentant une forme rectangulaire, l'élément formant sachet (150) présentant quatre côtés, au moins deux côtés opposés présentant une largeur qui correspond au moins à une longueur d'arête du bord (126).

11. Emballage extérieur (110) selon l'une quelconque des revendications précédentes, l'élément formant sachet (150) comprenant au moins un sachet en film (166), en particulier un sachet en film (166) en une matière plastique, de préférence une matière plastique sélectionnée parmi le groupe constitué de : polyéthylène ; polypropylène ; téréphtalate de polyéthylène.

12. Emballage extérieur (110) selon l'une quelconque des revendications précédentes, au moins une vignette d'indication (153) étant appliquée, de manière préférée étant collée, sur un côté extérieur de l'élément formant sachet (150).

13. Procédé destiné à une sécurisation du transport d'au moins une marchandise (174), la marchandise (174) étant au moins partiellement enfermée par au moins un moyen d'emballage (170), de manière préférée au moins un carton, au moins un conditionnement (112) étant formé, le conditionnement (112) étant reçu dans un emballage extérieur (110) destiné à une sécurisation du transport d'au moins un conditionnement (112), l'emballage extérieur (110) comportant au moins un élément de support (114) avec un côté supérieur (122) et un côté inférieur (118), l'élément de support (114) comportant au moins une pièce de fond (120) tournée vers le côté inférieur (118) et au moins un bord (126) tourné vers le côté supérieur (122), l'élément de support (114) étant au moins partiellement ouvert vers le côté supérieur (122), le au moins un conditionnement (112) étant introduit dans le emballage extérieur (110) de manière à être porté par l'élément de support (114), l'emballage (110) comprenant en outre au moins un élément formant sachet (150), le conditionnement (112) étant introduit dans l'élément formant sachet (150) de sorte que l'élément formant sachet (150) enferme le conditionnement (112) porté par l'élément de support (114), l'élément formant sachet (150) s'étendant sur le côté supérieur (122) de l'élément de support (114) au-delà du bord (126) de l'élément de support (114), l'élément de support (114) présentant au moins deux poignées (128), l'élément formant sachet (150) enfermant au moins partiellement l'élément de support (114), l'élément formant sachet (150) présentant au moins deux ouvertures (176), les poignées (128) étant accessibles à travers les ouvertures (176).
